# EUROPEAN PATENT SPECIFICATION

(11) **EP 3 246 387 B1**
(45) Date of publication and mention of the grant of the patent: **10.04.2024**
(21) Application number: 17171791.1
(22) Date of filing: 18.05.2017
(51) Int. Cl.: C12C 13/10, C12C 13/02, C12C 11/00

(54) **BEER MAKER**
BIERZUBEREITER
PRÉPARATEUR DE BIÈRE

(30) Priority: 18.05.2016 US 201662338498 P; 19.08.2016 KR 20160105793; 19.08.2016 KR 20160105790; 19.08.2016 KR 20160105791; 19.08.2016 KR 20160105796; 19.08.2016 KR 20160105788; 19.08.2016 KR 20160105789; 19.08.2016 KR 20160105792; 19.08.2016 KR 20160105794; 08.12.2016 KR 20160166574
(43) Date of publication of application: 22.11.2017
(73) Proprietor: LG Electronics Inc., Seoul 07336 (KR)
(72) Inventor: Sunyoung, Park, 08592 Seoul (KR); CHONG, Chungwook, 08592 Seoul (KR); KIM, Heeyeon, 08592 Seoul (KR)
(74) Representative: Ter Meer Steinmeister & Partner

(56) References cited:
- EP-A1- 3 578 481
- DE-U1-202015 106 465
- GB-A- 274 225
- GB-A- 2 335 902
- US-A- 4 754 698

## Description

### BACKGROUND

The present disclosure relates to a beer maker, and more particularly, to a beer maker capable of supplying materials for brewing beer to a beer brewing pack.

Beer is an alcoholic beverage brewed by filtering wort made with malt made from germinated barley, adding hops to the wort, and then fermenting the wort with yeast.

Customers may purchase ready-made articles brewed and sold by beer brewers, or house beers (or handmade beers) may be brewed by directly fermenting materials of the beers in households or bars.

More various kinds of house beers may be brewed as compared with ready-made articles. The house beers may be brewed suitable for customers' tastes.

Materials for brewing beer may be water, malt, hops, yeast, fragrance additives, and the like.

The yeast may be called as leaven, and may be added to malt to ferment the malt. Also, the yeast may assist alcohol and carbonic acid to be generated.

The fragrance additives are additives that improve the taste of beer, such as fruit, syrup, and vanilla beans.

Typically, house beer may include a total of three steps, i.e., a wort producing step, a fermenting step, and a ripening step, and two weeks to three weeks may be required from the wort producing step to the ripening step.

In the house beer, it is important to maintain an optimum temperature in the fermenting step of the house beer. As the house beer is simply brewed, user's convenience can be improved.

Recently, the use of beer makers capable of easily brewing house beers in households or bars has gradually increased. Such beer makers are preferably configured to allow their use to be convenient while maintaining an optimum temperature for beer fermentation.

### [Prior Art Document]

### [Patent Document]

KR 20-0319526 U (announced on July 12, 2003)
GB 2 335 902 A describes a brewing device for home brewing has a pressure vessel containing a flexible liner which is disposable and provides a sterile interior to the pressure vessel (which is itself not disposable). The vessel is pressurized by a bellows type dispensing pump to allow the brewed liquid to be discharged through a dispensing tube. The dispensing tube is preferably disposable as are all other components which come in contact with the liquid fermenting within the liner. The device includes a pressure relief valve to limit the dispensing pressure to a value consistent with best foaming of the beverage being dispensed.
GB 274 225 A describes how Beer is brewed in a vessel, the fermentation being carried out in two stages at temperatures 3 to 6 C. and 10 to 25 C. respectively. The first stage comprises aerating the wort in the vessel, supplying about 2 per cent of aerated yeast from a vessel and fermenting for from 3 to 5 days until only 1 to 1 per cent fermentable matter remains, the temperature being controlled by cooling fluid in a jacket. The fermenting liquor is agitated towards the end of this stage by supplying carbon dioxide through a pipe and a porous plate. The carbon dioxide generated during the process is passed out and collected through a pipe. The yeast is then allowed to settle and is drawn off periodically through a pipe into the vessel. During settling, the yeast is maintained at 1 C. to prevent decomposition by supplying cooling liquid to a jacket. The second stage is carried out by the use of the remaining suspended yeast and a certain amount of yeast allowed to remain in the vessel or supplied thereto from the vessel. The temperature is raised by warm water supplied to the jacket or by steam supplied through a pipe and air is supplied through the pipe and circulated by a fan. The yeast in the tank is aerated through a pipe and is purified by supplying alkaline liquid and subsequently washing water through a pipe, the washing liquid being withdrawn through a funnel.
DE 20 2015 106465 U1 describes a mini brewing system comprising a brewing container having a bottom portion, a preferably insulated housing shell, and a head portion, the head portion being spaced through the housing shell and is substantially parallel arranged to the bottom part. Cooling elements and heating elements, as well as sieve and filter elements can be arranged in the brewing container. The brewing container is additionally pivotable about its longitudinal axis rotatably and independently thereof.
US 4 754 698 A describes a conventional home brewing apparatus for beer includes a container with some form of heater therein and a bag for suspending grain in the container. A more efficient home brewing apparatus includes a container with a pump for withdrawing liquid from the bottom of the container and re-introducing the liquid into the container at the top thereof, separate heater and heater control elements, a liquid level indicator, a separate cooling coil for removable mounting in the container, and a multi-level grid structure for supporting the grain bag at a location spaced apart from the heater. The circulating of the liquid ensures that the temperature throughout the brewing liquid is uniform, and that there is consistency from batch to batch.

### Summary

Embodiments provide a beer maker capable of extracting beer while cleanly maintaining the inside of a fermentation tank.

Embodiments also provide a beer maker capable of extracting beer without providing a separate pump for extracting the beer in a beer extraction flow path.

Embodiments also provide a beer maker capable of simply extracting beer.

The object is solved by the features of the independent claim.

The beer maker includes: a fermentation tank having an opening formed therein; the fermentation tank is adapted to accommodate a beer brewing pack insertable in the fermentation tank through the opening, the beer brewing pack containing beer therein. Accordingly, beer can be extracted while cleanly maintaining the inside of the fermentation tank.

Preferably, the beer maker is a home appliance or may be a household appliance. It may have compact size and could be easily transported.

The beer maker includes an air supply flow path connected to the inside of the fermentation tank to supply air into the fermentation tank assembly, between the fermentation tank and the beer brewing pack.

The beer maker includes a fermentation tank assembly including the fermentation tank having the opening formed therein and a fermentation tank cover covering the opening.

The beer maker includes a main flow path connected to the fermentation tank assembly and a beer extraction flow path connected to the main flow path.

The beer maker may include an air pump disposed in the air supply flow path. Accordingly, the beer maker can extract beer without providing a separate pump for extracting beer in the beer extraction flow path. Further, the beer maker can simply extract beer.

The beer maker may further include a controller for controlling the parts of the beer maker.

Preferably the controller may drive the air pump to inject air into the fermentation tank through the air supply flow path, after beer extraction is completed.

The beer maker may further include: a gas extraction flow path connected to the fermentation tank cover; and a gas opening/closing valve opening/closing the gas extraction flow path.

The beer maker may further include a controller controlling the gas opening/closing valve to open the gas extraction flow path, when the beer is extracted. Gas of the beer brewing pack may be extracted through the gas extraction flow path.

The beer maker may further include a main valve opening/closing the main flow path; a beer extraction valve disposed in the beer extraction flow path.

Preferably, a controller may control the main valve to open the main flow path if the beer extraction valve is opened.

If the beer extraction valve is closed, the controller may control the main valve to close the main flow path.

The beer extraction valve may further include a micro switch turned on or turned off, when the beer extraction valve is opened or closed.

The beer maker may further include: an air pump installed in the air supply flow path.

The beer maker may further include: a main valve opening/closing the main flow path.

The beer maker may further include: a beer extraction valve disposed in the beer extraction flow path.

The beer maker may further include: a gas opening/closing valve opening/closing the gas extraction flow path.

The beer maker may further include: an air control valve opening/closing the air supply flow path.

Preferably, a controller is controlling, if the beer extraction valve is opened, the main valve to open the main flow path and controlling the gas opening/closing valve to open the gas extraction flow path.

After the beer extraction is completed, the controller may control the main valve to close the main flow path, and control the gas opening/closing valve to close the gas extraction flow path.

After the beer extraction is completed, the controller may control the air control valve to open the air supply flow path, and drive the air pump.

The beer extraction valve may further include a micro switch turned on or turned off, when the beer extraction valve is opened or closed.

When the micro switch is turned on, the controller may control the main valve to open the main flow path, and control the gas opening/closing valve to open the gas extraction flow path.

When the micro switch is turned off, the controller may control the main valve to open the main flow path, control the gas opening/closing valve to close the gas extraction flow path, control the air control valve to open the air supply flow path, and drive the air pump.

The beer maker may further include: an air pump disposed in the air supply flow path; an air control valve opening/closing the air supply flow path; and a pressure sensor disposed in the gas extraction flow path and/or the fermentation tank cover, the pressure sensor measuring a pressure value.

If the pressure value is less than a first reference value, the controller may control the air control valve to open the air supply flow path, and drive the air pump to inject air into the fermentation tank assembly.

When the air pump is driven, the controller may control the pressure sensor to measure a pressure value of the gas extraction flow paths. If the pressure value exceeds a second reference value, the controller may control the air control valve to close the air supply flow path, and stop the air pump.

The beer maker may further include: an air pump disposed in the air supply flow path; an air control valve opening/closing the air supply flow path. The beer maker includes an air relief valve disposed in the air supply flow path.

The air pump, the air control valve, and the air relief valve may be sequentially disposed along the direction in which the air is supplied.

The beer maker may further include a gas discharge relief valve disposed in the gas extraction flow path.

According to the present disclosure, the beer brewing pack is compressed by air supplied between the beer brewing pack and the fermentation tank assembly to extract beer, so that the beer maker can be more cleanly maintained and managed as compared with when a pump that pumps beer is installed in the beer extraction flow path.

Further, the beer extraction flow path is connected to the main flow path, so that the structure of the fermentation tank assembly can be simplified.

Further, beer can be simply extracted without providing a separate pump in the beer extraction flow path.

Further, gas in the fermentation tank is discharged through the air relief valve, so that it is possible to prevent the pressure in the beer brewing pack from being rapidly increased.

Further, gas in the beer brewing pack is discharged through the gas discharge relief valve, so that it is possible to prevent the pressure in the beer brewing pack from being rapidly increased.

Further, the air filter is provided in the gas extraction flow path, so that a foreign substance of gas discharged from the beer brewing pack can be filtered and discharged.

### BRIEF DESCRIPTION OF THE DRAWINGS

FIG. 1 is an entire configuration view of a beer maker according to an embodiment.
FIG. 2 is a perspective view of the beer maker according to the embodiment.
FIG. 3 is a perspective view illustrating an inside of the beer maker according to the embodiment.
FIG. 4 is a front view illustrating an inside of the beer maker according to the embodiment.
FIG. 5 is a sectional view illustrating an inside of a fermentation tank assembly of the beer maker according to the embodiment.
FIG. 6 is a sectional view when an opening shown in FIG. 5 is opened.
FIG. 7 is a side view illustrating an example of a beer brewing pack of the beer maker according to the embodiment.
FIG. 8 is a sectional view illustrating the example of the beer brewing pack of the beer maker according to the embodiment.
FIG. 9 is a side view illustrating another example of the beer brewing pack of the beer maker according to the embodiment.
FIG. 10 is a sectional view illustrating the another example of the beer brewing pack of the beer maker according to the embodiment.
FIG. 11 is a sectional view illustrating still another example of the beer brewing pack of the beer maker according to the embodiment.
FIG. 12 is a sectional view illustrating a beer extraction valve of the beer maker according to the embodiment.
FIG. 13 is a flowchart illustrating a control sequence of the beer maker according to the embodiment.
FIG. 14 is a configuration view of a control system for extracting beer in the beer maker according to the embodiment.
FIG. 15 is a flowchart illustrating a sequence of a first embodiment of beer extraction control preformed by the beer maker according to the embodiment.
FIG. 16 is a flowchart illustrating a sequence of a second embodiment of the beer extraction control preformed by the beer maker according to the embodiment.

### DETAILED DESCRIPTION OF THE EMBODIMENTS

Hereinafter, exemplary embodiments of the present disclosure will be described in detail with reference to the accompanying drawings.

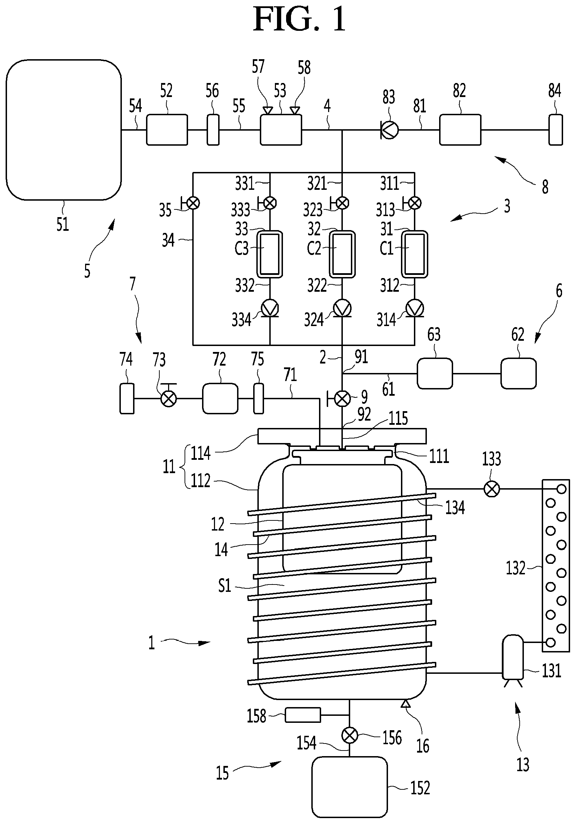

FIG. 1 is an entire configuration view of a beer maker according to an embodiment.

The beer maker, as shown in FIG. 1, may include a fermentation module 1, a supplier 3 connected to the fermentation module 1 through a main flow path 2, a water supply module 5 connected to the supplier 3 through a water supply flow path 4, and a beer extractor 6 that allows beer fermented in the fermentation module 1 to be extracted to the outside.

The fermentation module 1 includes a fermentation tank assembly 11 having a space S1 formed therein.

The fermentation tank assembly 11 may include a fermentation tank 112 has an opening 111 formed at an upper portion thereof, the fermentation tank 112 having the space S1 formed therein, and a fermentation tank cover 114 covering the opening 111.

The fermentation tank 112 may be configured as an assembly of a plurality of members.

The fermentation tank cover 114 is used to seal the inside of the fermentation tank 112, and may be disposed at an upper portion of the fermentation tank 112 to cover the opening 111. A main flow path connecting part 115 connected to the main flow path 2 may be formed in the fermentation tank cover 114.

In addition, the fermentation module 1 may further include a beer brewing pack 12 inserted and accommodated in the fermentation tank assembly 11. The beer brewing pack 12 may be a pack in which materials for brewing beer are accommodated.

The beer brewing pack 12 may be formed smaller than the space S1 formed in the fermentation tank assembly 11. The beer brewing pack 12 may be inserted and accommodated in the fermentation tank 11 in a state in which the materials are accommodated therein. The beer brewing pack 12 may be inserted into the fermentation tank 112 to be accommodated in the fermentation tank 112 in a state in which the opening 111 of the fermentation tank 112 is opened. The fermentation tank cover 114 may cover the opening 111 of the fermentation tank 112 after the beer brewing pack 12 is inserted into the fermentation tank 112. The beer brewing pack 12 may assist the materials to be fermented in a state in which the beer brewing pack 12 is accommodated in the space S1 sealed by the fermentation tank 112 and the fermentation tank cover 114. The beer brewing pack 12 may be expanded by a pressure therein while the beer is being brewed.

Meanwhile, the materials for brewing the beer may include water, malt, yeast, hops, fragrance additives, and the like.

The beer maker may include both of the supplier 3 and the beer brewing pack 12, and the materials for brewing the beer may be distributed and accommodated in the supplier 3 and the beer brewing pack 12. Some materials among the materials for brewing the beer may be accommodated in the beer brewing pack 12, and the other materials may be accommodated in the supplier 3. The other materials accommodated in the supplier 3 may be supplied to the beer brewing pack 12 together with water supplied from the water supply module 5, and be mixed with the some materials accommodated in the beer brewing pack 12.

A main material essential to brew the beer may be accommodated in the beer brewing pack 12, and additives added to the main material may be accommodated in the supplier 3. In this case, the additives accommodated in the supplier 3 may be mixed with the water supplied from the water supply module 5 to be supplied to the beer brewing pack 12, and be mixed with the main material accommodated in the beer brewing pack 12.

The main material accommodated in the beer brewing pack 12 is a material having a larger volume than the other materials, and may be the malt among the malt, the yeast, the hops, and the fragrance additives. In addition, the additives accommodated in the supplier 3 may be the other materials except the malt among the material for brewing the beer, and be the yeast, the hops, the fragrance additives, and the like.

In addition, the beer maker does not include the supplier 3, but includes the beer brewing pack 12. In this case, the main material may be accommodated in the beer brewing pack 12, and the user may directly inject the additives into the beer brewing pack 12.

When the beer maker includes both of the supplier 3 and the beer brewing pack 12, the beer can be more conveniently brewed. Hereinafter, the case where the beer maker includes both of the supplier 3 and the beer brewing pack 12 is described as an example. However, it will be apparent that the present disclosure is not limited to the case where the beer maker includes both of the supplier 3 and the beer brewing pack 12.

The materials injected into the beer brewing pack 12 may be fermented as time elapses. The beer that has been completely brewed in the beer brewing pack 12 may flow in the main flow path 2 through the main flow path connecting part 115, and flow from the main flow path 2 to the beer extractor 6 to be extracted from the beer extractor 6.

The fermentation module 1 may further include a temperature controller that changes a temperature of the fermentation tank assembly 11. As the temperature controller heats or cools the fermentation tank assembly 11, the temperature of the fermentation tank assembly 11 can be controlled to an optimum temperature for brewing the beer.

The temperature controller may include a refrigeration cycle apparatus 13 including a compressor 131, a condenser 132, an expansion device 133, and an evaporator 134, and any one of the condenser 132 and the evaporator 134 may be disposed at the fermentation tank assembly 11.

When the condenser 132 is disposed in contact with the fermentation tank 112, the refrigeration cycle apparatus 13 may control a temperature of the fermentation tank 112 by heating the fermentation tank 112. In this case, the condenser 132 may be disposed in contact with the outer surface of the fermentation tank 112. The condenser 132 may include a condensing tube wound around the outer surface of the fermentation tank 112.

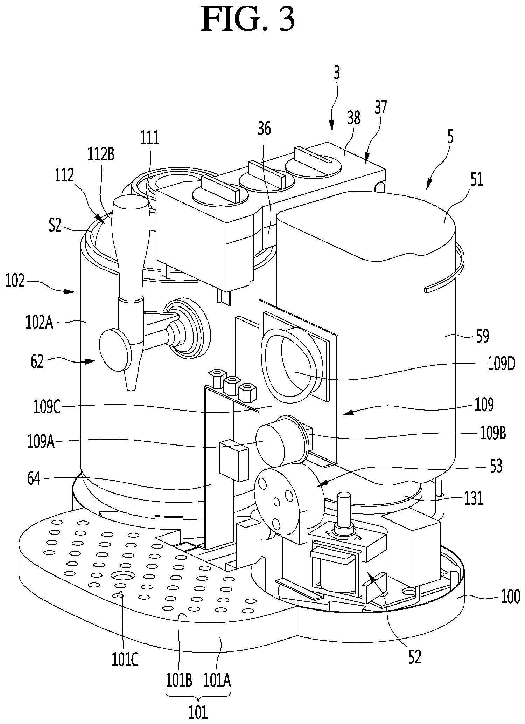

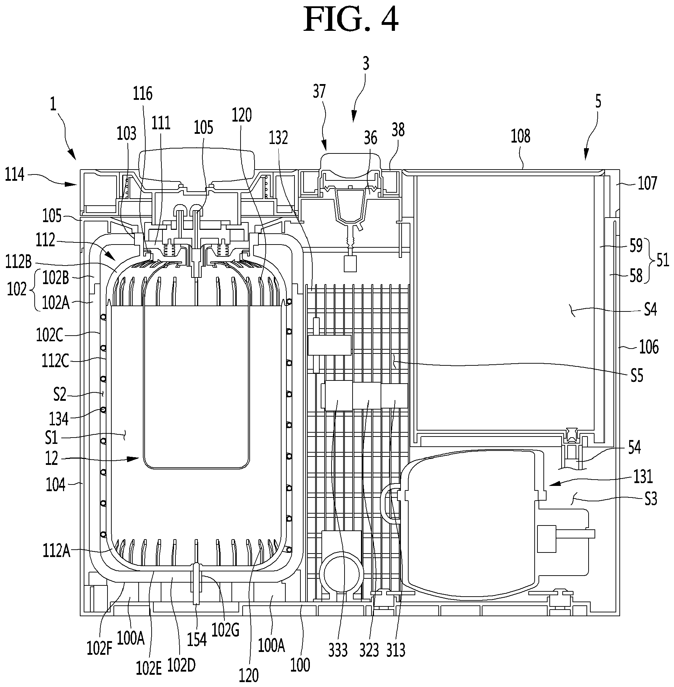

When the evaporator 134 is disposed in contact with the fermentation tank 112, the refrigeration cycle apparatus 13 may control the temperature of the fermentation tank 112 by cooling the fermentation tank 112. In this case, the evaporator 134 may be disposed in contact with the outer surface of the fermentation tank 112. The evaporator 134 may include an evaporating tube wound around the outer surface of the fermentation tank 112. The evaporating tube may be accommodated between the fermentation tank 112 and a heat insulating wall 102 (see FIGS. 3 and 4), and cool the inside of a heat insulating space S2 heat-insulated by the heat insulating wall 102.

The temperature controller may further include a heater 14 that heats the fermentation tank assembly 11. The heater 14 may be disposed in contact with the outer surface of the fermentation tank 112, and be configured as a heater that generates heat when power is applied thereto. The heater 14 may be configured as a line heater, and be wound around the outer surface of the fermentation tank 112.

The refrigeration cycle apparatus 13 may be configured as a heat pump. The refrigeration cycle apparatus 13 may include a flow path switching valve (not shown). The flow path switching valve may be configured as a four-way valve. The flow path switching valve may be connected to each of an inlet flow path of the compressor 131 and an outlet flow path of the compressor 131. The flow path switching valve may be connected to the condenser 132 through a condenser connection flow path, and be connected to the evaporator 134 through an evaporator connection flow path.

When the fermentation tank 112 is cooled, the flow path switching valve may guide a refrigerant compressed by the compressor 131 to the condenser 132 and guide the refrigerant discharged from the evaporator 134 to the compressor 131.

When the fermentation tank 112 is heated, the flow path switching valve may guide the refrigerant compressed by the compressor 131 to the evaporator 134 and guide the refrigerant discharged from the condenser 134 to the compressor 131.

The beer maker may include a beer extraction pressurizing device 15 that injects air between the beer brewing pack 12 and the fermentation tank assembly 11. In a state in which the beer brewing pack 12 is accommodated in the fermentation tank assembly 11, the beer extraction pressurizing device 15 may inject air between the beer brewing pack 12 and the fermentation tank assembly 11, and the air injected into the fermentation tank assembly 11 may pressurize the beer brewing pack 12. The beer in the beer brewing pack 12 may be pressed by the beer brewing pack 12 pressurized by the air, and flow in the main flow path 2 by passing through the main flow path connecting part 115. The beer flowing in the main flow path 2 from the beer brewing pack 12 may be extracted to the outside through the beer extractor 6.

That is, in the beer maker, if the beer is completely brewed, the beer in the beer brewing pack 12 may be extracted through the beer extractor 6 in a state in which the beer brewing pack 12 is not taken out of the fermentation tank assembly 11 but located in the fermentation tank assembly 11.

The beer extraction pressurizing device 15 may include an air pump 152 that pumps air and an air supply flow path 154 that connects the air pump 152 and the inside of the fermentation tank assembly 11. The beer extraction pressurizing device 15 may further include an air control valve 156 installed in the air supply flow path 154. The beer extraction pressurizing device 15 may further include an air relief valve 158 provided to the air supply flow path 154. The air relief valve 158 may be installed posterior to the air control valve 156 in an air supply direction in the air supply flow path 154.

The air control valve 156 may be opened only when the beer is extracted to allow air to be introduced into the fermentation tank assembly 11, and maintain a closed state while the beer is not being extracted.

The beer maker may further include a temperature sensor 16 that measures a temperature of the fermentation tank assembly 11. The temperature sensor 16 may be installed to measure a temperature of the fermentation tank 112.

Hereinafter, the supplier 3 will be described as follows.

The supplier 3 may be connected to a water supply heater 53 through the water supply flow path 4, and be connected to the fermentation tank assembly 11 through the main flow path 2.

The supplier 3 may accommodate materials required to brew the beer therein, and be configured to allow water supplied from the water supply module 5 to pass therethrough. The materials accommodated in the supplier 3 may be yeast, hops, fragrance additives, and the like.

The materials accommodated in the supplier 3 may be directly accommodated in a material accommodation part formed in the supplier 3. At least one material accommodation part may be formed in the supplier 3. A plurality of material accommodation parts may be formed in the supplier 3. In this case, the plurality of material accommodation parts may be formed to be divided from one another.

Meanwhile, the materials accommodated in the supplier 3 may be accommodated in a capsule, and at least one capsule accommodation part in which the capsule is accommodated may be formed in the supplier 3. When the materials are accommodated in the capsule, the supplier 3 may be configured such that the capsule is mountable and extractable. The supplier 3 may be configured as a capsule kit assembly in which the capsule is separably accommodated.

Each of the main flow path 2 and the water supply flow path 4 may be connected to the supplier 3. The water supplied through the water supply flow path 4 may be mixed with the materials by passing through the material accommodation part or the capsule. The materials accommodated in the material accommodation part or the capsule may flow in the main flow path 2 together with the water.

A plurality of different kinds of additives may be separated from one another to be accommodated in the supplier 3. The plurality of additives accommodated in the supplier 3 may be yeast, hops, and fragrance additives, and be separated from one another to be accommodated in the supplier 3.

When a plurality of material accommodation parts are formed in the supplier 3, each of the plurality of material accommodation parts may be connected to the water supply flow path through a supplier entrance flow path, and be connected to the main flow path 2 through a supplier exit flow path.

When a plurality of capsule accommodation parts are formed in the supplier 3, each of the plurality of capsule accommodation parts may be connected to the water supply flow path 4 through the supplier entrance flow path, and be connected to the main flow path 2 through the supplier exit flow path.

The material accommodation part of the supplier 3 and the capsule accommodation part of the supplier 3 may be the substantially same component. When the capsule is inserted into the supplier 3 in a state in which the materials are accommodated in the capsule, the component may be referred to as the capsule accommodation part. When the materials are directly accommodated in the supplier 3 in a state in which the materials are not contained in the capsule, the component may be referred to as the material accommodation part. Since the material accommodation part and the capsule accommodation part may be the substantially same component, it will be described below that, for convenience of description, the capsule accommodation part is formed in the supplier 3.

The capsule accommodation part in which a capsule containing additives is at-tachably/detachably accommodated may be formed in the supplier 3. The supplier 3 may be connected to the water supply flow path 4 through the supplier entrance flow path, and be connected to the main flow path 2 through the supplier exit flow path.

An opening/closing valve that opens/closes the supplier entrance flow path may be installed in the supplier entrance flow path.

A check value that blocks a fluid of the main flow path 2 from flowing backward to the capsule accommodation part may be installed in the supplier exit flow path.

A plurality of capsule accommodation parts 31, 32, and 33 may be formed in the supplier 3. The plurality of capsule accommodation parts 31, 32, and 33 may be formed to be divided from one another. The plurality of capsule accommodation parts 31, 32, and 33 may be connected to supplier entrance flow paths and supplier exit flow paths, respectively.

Hereinafter, a first additive, a second additive, and a third additive may be accommodated in the supplier 3. The first additive may be yeast, the second additive may be hop, and the third additive may be a fragrance additive.

The supplier 3 may include a first capsule accommodation part 31 in which a first capsule C1 containing the first additive is accommodated, a second capsule accommodation part 32 in which a second capsule C2 containing the second additive is accommodated, and a third capsule accommodation part 33 in which a third capsule C3 containing the third additive is accommodated. However, the number of capsule accommodation parts and the required further elements is not limited to three, it could be less or more.

A first supplier entrance flow path 311 that guides water or air to the first capsule accommodation part 31 may be connected to the first capsule accommodation part 31, and a first supplier exit flow path 312 through which water discharged from the first capsule accommodation part 31, a mixture of the water and the first additive, and air are guided may be connected to the first capsule accommodation part 31. A first opening/closing valve 313 that opens/closes the first supplier entrance flow path 311 may be installed in the first supplier entrance flow path 311. A first check valve 314 that blocks the fluid of the main flow path 2 from flowing backward to the first capsule accommodation part 31 while allowing a fluid of the first capsule accommodation part 31 to flow in the main flow path 2 may be installed in the first supplier exit flow path 312. Here, the fluid may include the water discharged from the first capsule accommodation part 31, the mixture of the water and the first additive, and the air.

A second supplier entrance flow path 321 that guides water or air to the second capsule accommodation part 32 may be connected to the second capsule accommodation part 32, and a second supplier exit flow path 322 through which water discharged from the second capsule accommodation part 32, a mixture of the water and the second additive, and air are guided may be connected to the second capsule accommodation part 32. A second opening/closing valve 323 that opens/closes the second supplier entrance flow path 321 may be installed in the second supplier entrance flow path 321. A second check valve 324 that blocks the fluid of the main flow path 2 from flowing backward to the second capsule accommodation part 32 while allowing a fluid of the second capsule accommodation part 32 to flow in the main flow path 2 may be installed in the second supplier exit flow path 322. Here, the fluid may include the water discharged from the second capsule accommodation part 32, the mixture of the water and the second additive, and the air.

A third supplier entrance flow path 331 that guides water or air to the third capsule accommodation part 33 may be connected to the third capsule accommodation part 33, and a third supplier exit flow path 332 through which water discharged from the third capsule accommodation part 33, a mixture of the water and the third additive, and air are guided may be connected to the third capsule accommodation part 33. A third opening/closing valve 333 that opens/closes the third supplier entrance flow path 331 may be installed in the third supplier entrance flow path 331. A third check valve 334 that blocks the fluid of the main flow path 2 from flowing backward to the third capsule accommodation part 33 while allowing a fluid of the third capsule accommodation part 33 to flow in the main flow path 2 may be installed in the third supplier exit flow path 332. Here, the fluid may include the water discharged from the third capsule accommodation part 33, the mixture of the water and the third additive, and the air.

The beer maker may include a bypass flow path 34 that enables the water supplied from the water flow path 4 to be supplied to the main flow path 2 by bypassing the capsule accommodation parts 31, 32, and 33.

The bypass flow path 34 may be connected to the water supply flow path 4 and the main flow path 2, and water or air of the water flow path 4 may be guided to the bypass flow path 34 to flow in the main flow path 2 by bypassing the capsule accommodation parts 31, 32, and 33.

The bypass flow path 34 may be connected in parallel to flow paths of the first capsule accommodation part 31, the second capsule accommodation part 32, and the third capsule accommodation part 33.

A bypass valve 35 that opens/closes the bypass flow path 34 may be installed in the bypass flow path 34.

The beer maker includes a main supply flow path that guides the water, the materials of the beer, or the air to the fermentation tank assembly 11 therethrough.

When the beer maker includes both of the supplier 3 and the water supply module 5, the main supply flow path may include all of the main flow path 2, the bypass flow path 34, and the water supply flow path 4. In this case, the main supply flow path may supply all of the water, the air, and the materials of the beer to the fermentation tank assembly 11.

The beer maker may include the supplier 3, but may not include the water supply module 5. In this case, the main supply flow path may include all of the main flow path 2, the bypass flow path 34, and the water supply flow path 4. The water supply flow path 4 may be directly connected to a water faucet or include a water supply tube that is connected to the water faucet through a separate connection hose to be supplied with external water. The water supply tube may be supplied with external water to supply the external water to the bypass flow path 34 or the supplier 3. That is, the main supply flow path may supply all of the water, the air, and the materials of the beer to the fermentation tank assembly 11 therethrough.

The beer maker includes the water supply module 5, but may not include the supplier 3. In this case, the main supply flow path may include the main flow path 2, and the main flow path 2 may be directly connected to the water supply module 5. In addition, an air injection flow path 81 of an air injector 8 may be connected to the main flow path 2.

When the beer maker includes the water supply module 5 but does not include the supplier 3, the main supply flow path does not require a separate water supply flow path 4 or bypass flow path 34 that connects the water supply module 5 and the supplier 3, and the main flow path 2 may be directly supplied from the water supply module 5. In addition, the air injection flow path 81 of the air injector 8 may be connected to a portion located between the water supply module 5 and a main valve 9 in the main flow path 2.

When the beer maker includes the water supply module 5 but does not include the supplier 3, water of the water supply module 5 may be supplied to the fermentation tank assembly 11 through the main flow path 2, and air of the air injector 8 may be supplied to the fermentation tank assembly 11 through the main flow path 2. That is, the main flow path may supply water and air to the fermentation tank assembly 11.

The beer maker may not include both of the supplier 3 and the water supply module 5. In this case, the main supply flow path may include the main flow path 2, and the main flow path 2 may be directly connected to a water faucet or include a water supply tube that is connected to the water faucet through a separate connection hose to be supplied with external water. The water supply tube may be supplied with external water to supply the external water to the fermentation tank assembly 11.

When the beer maker does not include both of the supplier 3 and the water supply module 5, the main supply flow path does not require a separate water supply flow path 4 or bypass flow path 34 that connects the water supply module 5 and the supplier 3, and the main flow path 2 may be directly supplied from the water supply module 5. In this case, the air injection flow path 81 of the air injector 8 may be connected to the main flow path 2, and be connected prior to the main valve 9 in the main flow path 2. That is, the main supply flow path may supply water and air to the fermentation tank assembly 11.

Hereinafter, the case where the beer maker includes all of the main flow path 2, the water supply flow path 4, and the bypass flow path 34 will be described as an example.

The main flow path 2 may be connected to the first supplier exit flow path 312, the second supplier exit flow path 322, the third supplier exit flow path 332, and the bypass flow path 34. The main flow path 2 may include a common tube connected to the fermentation tank assembly 11 and a combination tube connected to the first supplier exit flow path 312, the second supplier exit flow path 322, the third supplier exit flow path 332, the bypass flow path 34 and the common tube.

The main flow path 2 may be connected to the fermentation tank assembly 11, and be connected to the fermentation tank cover 114 in the fermentation tank assembly 11.

The water supply flow path 4 may be connected to the first supplier entrance flow path 311, the second supplier entrance flow path 321, the third supplier entrance flow path 331, and the bypass flow path 34.

The water supply flow path 4 may include a common tube connected to the water supply module 5, and a plurality of branch tubes branching off from the common tube, the plurality of branch tubes being connected to the first supplier entrance flow path 311, the second supplier entrance flow path 321, the third supplier entrance flow path 331, and the bypass flow path 34.

The water supply module 5 may include a water tank 51 containing water, a water supply pump 52 that pumps the water of the water tank 51, and the water supply heater 53 that heats the water pumped by the water supply pump 52.

A water tank outlet flow path 54 may be connected to the water tank 51, and the water supply pump 52 may be connected to the water tank outlet flow path 54.

A water supply pump outlet flow path 55 may be connected to the water supply pump 52, and the water supply heater 53 may be connected to the water supply pump outlet flow path 55.

A flow meter 56 that measures a flow rate of the water supply pump outlet flow path 55 may be installed in the water supply pump outlet flow path 55.

The water supply heater 53 may be a mold heater, and include a heater case through which the water pumped by the water supply pump 52 passes, and a heater installed in the heater case to heat water introduced into the heater case. A thermistor 57 that measures a temperature of the water supply heater 53 may be installed in the water supply heater 53. In addition, a thermal fuse 58 that cuts off current applied to the water supply heater 53 as a circuit is interrupted when the temperature of the water supply heater 53 is high.

When the water supply pump 52 is driven, water of the water tank 51 may be guided to the water supply heater 53 through the water tank outlet flow path 54, the water supply pump 52, and the water supply pump outlet flow path 55. The water guided to the water heater 53 may be heated by the water supply heater 53 and then guided to the water supply flow path 4.

The beer extractor 6 may be connected to the main flow path 2. The beer extractor 6 may include a beer extraction flow path 61 connected to the main flow path 2, the beer extraction flow path 61 allowing the beer of the main flow path 2 to be guided therethrough. The beer extractor 6 may further include a beer extraction valve 62 connected to the beer extraction flow path 61.

An anti-foaming path 63 may be provided in the beer extraction flow path 61, and foam of the beer flowing from the main flow path 2 to the beer extraction flow path 61 may be minimized by passing through the anti-foaming path 63. A mesh, etc., through which foam is filtered, may be provided in the anti-foaming path 63.

The beer extraction valve 62 may include a lever manipulated by the user and a tap valve having a micro switch that detects a manipulation of the user.

Meanwhile, the beer maker may further include a gas discharger that discharges gas in the fermentation module 1 to the outside.

The gas discharger 7 may include a gas extraction flow path 71 connected to the fermentation module 1 and a pressure sensor 72 installed in the gas extraction flow path 71. The gas discharger 7 may further include a gas opening/closing valve 73 that opens/closes the gas extraction flow path 71. The gas discharger 7 may further include an air filter 74 through which gas passing through the gas opening/closing valve 73 passes.

The gas extraction flow path 71 may be connected to the fermentation tank assembly 11, particularly, the fermentation tank cover 114.

The gas opening/closing valve 73 may be turned on when air is injected into the beer brewing pack 12, to be opened. The beer maker may allow malt and water to be uniformly mixed together by injecting air into the beer brewing pack 12. At this time, bubbles generated from the liquid malt may be discharged to the outside at an upper portion of the beer brewing pack 12 through the gas extraction flow path 71 and the gas opening/closing valve 73.

The gas opening/closing valve 73 may be opened to detect a fermentation degree during a fermentation process. The gas in the beer brewing pack 12 may flow in the pressure sensor 72. The pressure sensor 72 may sense a pressure of the gas discharged from the beer brewing pack 12.

The pressure sensor 72, the gas opening/closing valve 73, and the air filter 74 may be sequentially disposed in a gas discharge direction in the gas extraction flow path 71.

The gas discharger 7 may further include a gas discharge relief valve 75 provided in the gas extraction flow path 71. The gas discharge relief valve 75 may be installed prior to the pressure sensor 72 in the gas discharge direction.

The beer maker may further include the air injector 8 connected to at least one of the main flow path 2 and the water supply flow path 4 to inject air.

When the air injector 8 is connected to the water supply flow path 4, air may be injected into the supplier 3 through the water supply flow path 4. The air injected into the water supply flow path 4 may sequentially pass through the supplier 3 and the main flow path 2 and then be injected into the beer brewing pack 12. When the air injector 8 is connected to the water supply flow path 4, air may be injected into the beer brewing pack 12 through the water supply flow path 4, the bypass flow path 34, and the main flow path 2. The air injector 8 may supply the air to materials in the beer brewing pack 12.

When the air injector 8 is connected to the water supply flow path 4, air may be injected into the capsule accommodation parts 31, 32, and 33 through the water supply flow path 4, remaining water or sludge in the capsules C1, C2, and C3 and the capsule accommodation parts 31, 32, and 32 may flow in the main flow path 2, and the capsules C1, C2, and C3 and the capsule accommodation parts 31, 32, and 32 may be cleanly maintained.

The air injector 8 may include the air injection flow path 81 connected to the water supply flow path 4 and an air injection pump 82 that pumps air to the air injection flow path 81.

The air injector 8 may further include a check valve 83 that blocks the water of the water supply flow path 4 from being introduced into the air injection pump 82 through the air injection flow path 81. The check valve 83 may be installed posterior to the air injection pump 82 in an air injection direction.

The air injector 8 may further include an air filter 84 connected to the air injection flow path 81, the air filter 84 being installed prior to the air injection pump 82 in the air injection direction.

When the air injection pump 82 is driven, dust, etc. in air may be filtered by the air filter 84, and the air passing through the air filter 84 may be flowed by the air injection pump 82 to flow in the water supply flow path 4.

The beer maker may further include the main valve 9 that opens/closes the main flow path 2.

The main valve 9 may be installed, in the main flow path 2, between a connection part 91 of the main flow path 2 and the beer extraction flow path 61 and a connection part 92 of the main flow path 2 and the fermentation tank assembly 11.

The main valve 9 may opened when hot water is injected into the beer brewing pack 12, to open the main flow path 2. The main valve 9 may be closed while the fermentation tank assembly 11 is cooled, to close the main flow path 2. The main valve 9 may be opened when air is injected into the beer brewing pack 12, to open the main flow path 2. The main valve 9 may be opened when an additive is supplied to the inside of the beer brewing pack 12, to open the main flow path 2. The main valve 9 may be closed while materials are being fermented, to close the inside of the beer brewing pack 12. The main valve 9 may be closed when the beer is ripened and kept, to close the inside of the beer brewing pack 12. The main valve 9 may be opened when the beer is extracted from the beer extractor 6, to open the main flow path 2.

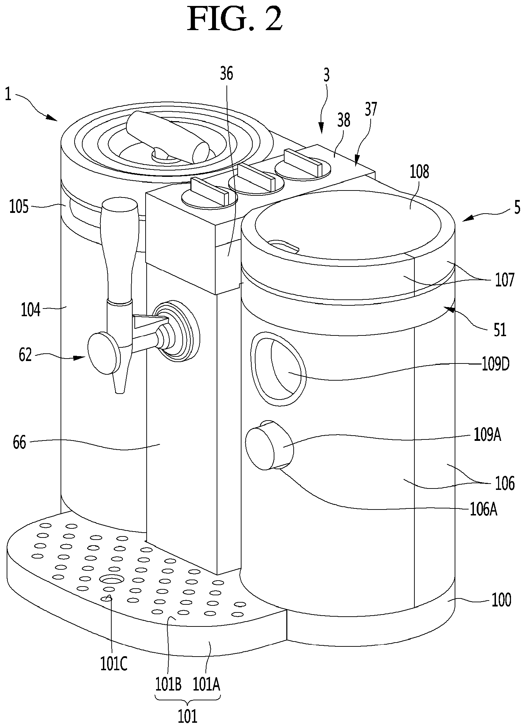

FIG. 2 is a perspective view of the beer maker according to the embodiment. FIG. 3 is a perspective view illustrating an inside of the beer maker according to the embodiment. FIG. 4 is a front view illustrating an inside of the beer maker according to the embodiment.

The beer maker may further include a base 100. The base 100 may form a bottom appearance of the beer maker, and support the fermentation tank assembly 11, the compressor 131, the water supply heater 53, the water supply pump 52, the water tank 51, and the like, which are located at the top side thereof.

The beer maker may further include a beer container 101 capable of receiving and keeping beer dropping from the beer extraction valve 62. The beer container 101 may be integrally formed with the base 100 or be coupled to the base 100.

The beer container 101 may include a container body 101A having a space in which the beer dropping from the beer extraction valve 62 is accommodated. The beer container 101 may include a container top plate 101B disposed at the top surface of the container body 101A to cover the space in the container body 101A.

The container body 101A may be formed to protrude forward at a front portion of the base 100. The top surface of the container body 101A may be opened.

Holes 101C through which the beer drops into the container body 101A may be formed in the container top plate 101B.

Beer dropping around a beer container (not shown) in the beer dropping from the beer extraction valve 62 may drop to the container top plate 101B, and be temporarily kept inside the beer container 101 through the holes 101C of the container top plate 101B. Thus, surroundings of the beer maker can be cleanly maintained.

The fermentation tank 112, as shown in FIG. 4, may include a lower fermentation tank 112A of which top surface is opened, the lower fermentation tank 112A having a space formed therein, and an upper fermentation tank 112B disposed at the top of the lower fermentation tank 112A, the upper fermentation tank 112B having the opening 111 formed in the top surface thereof.

A seat part 116 on which the beer brewing pack 12 is mounted may be provided in the fermentation tank 112. The seat part 116 may be provided to protrude from the opening 111, and a circumferential part of the beer brewing pack 12 may be mounted on the seat part 116.

The beer maker may include the heat insulating wall 102 surrounding both of the fermentation tank 112 and the evaporator 134.

The heat insulating wall 102 may be formed of polystyrene foam or the like, which has high heat insulation performance and can absorb vibration.

A heat insulating wall opening 103 may be formed at an upper portion of the heat insulating wall 102, and the heat insulating space S2 may be formed inside the heat insulating wall 102.

The heat insulating wall 102 may be configured as an assembly of a plurality of members. The heat insulating wall 102 may include a lower heat insulating wall 102A of which top surface is opened, the lower heat insulating wall 102A having a space formed therein, and an upper heat insulating wall 102B disposed at the top of the lower heat insulating wall 102A, the upper heat insulating wall 102B having the heat insulating wall opening 103 formed in the top surface thereof.

The heat insulating wall 102 having the lower heat insulating wall 102A and the upper heat insulating wall 102B may surround the circumferential and bottom surfaces of the fermentation tank 112.

The heat insulating wall opening 103 of the heat insulating wall 102 may surround an upper portion of the fermentation tank 112. The heat insulating wall opening 103 of the heat insulating wall 102 may surround the outer surface of a portion at which the heat insulating wall opening 103 is formed in the fermentation tank 112.

An inner surface 102C of the heat insulating wall 102 may have a larger diameter than an outer surface 112C of the fermentation tank 112, and a gap may be formed between the inner surface 102C of the heat insulating wall 102 and the outer surface 112C of the fermentation tank 112. Air may be filled in the gap, and the air between the inner surface 102C of the heat insulating wall 102 and the outer surface 112C of the fermentation tank 112 may heat-insulate the fermentation tank 112. The gap between the inner surface 102C of the heat insulating wall 102 and the outer surface 112C of the fermentation tank 112 may be a space in which the evaporator 134 is accommodated, and simultaneously be a space that can minimize a change in temperature of the fermentation tank 112.

The fermentation tank 112 may be mounted on a top surface 102E of a bottom plate part 102D of the heat insulating wall 102, and be supported by the top surface 102E of the bottom plate part 102D of the heat insulating wall 102.

A bottom surface 102F of the bottom plate part 102D of the heat insulating wall 102 may be placed on a heat insulating wall supporter 100A formed on the top surface of the base 100.

An air supply flow path through-hole 102G through which the air supply flow path 154 passes may be formed in the bottom plate part 102D of the heat insulating wall 102. A portion of the air supply flow path 154 may be inserted into the heat insulating wall 102, and be connected to the fermentation tank 112.

Meanwhile, the evaporator 134 may be an evaporating tube wound around the outer surface of the fermentation tank 112 to be located in the gap. The evaporator 134 may be in contact with each of the outer surface 112C of the fermentation tank 112 and the inner surface 102C of the heat insulating wall 102. The evaporator 134 may be supported by the heat insulating wall 102.

The evaporator 134 may include an extending tube (not shown) extending to the outside of the heat insulating wall 102 by passing through an evaporating tube through-hole (not shown) formed in the heat insulating wall 102.

The beer maker may include a heat insulating wall cover 104 and 105 surrounding the circumferential and top surfaces of the heat insulating wall 102.

The heat insulating wall cover 104 and 105 may be configured as one cover, and be configured as an assembly of a plurality of covers.

The heat insulating wall cover 104 and 105 may include a lower heat insulating wall cover 104 of which bottom surface is opened, the lower heat insulating wall cover 104 surrounding the outer circumferential surface of the heat insulating wall 102, and an upper heat insulating wall cover 105 disposed at the top of the lower heat insulating wall cover 104, the upper heat insulating wall cover 105 covering the top surface of the heat insulating wall 102.

A lower portion of the lower heat insulating wall cover 104 may be placed on the base 100.

A lower portion of the upper heat insulating wall cover 105 may be placed on the top end of the lower heat insulating wall cover 104.

The heat insulating wall cover 104 and 105 may protect the heat insulating wall 102, and form a portion of the appearance of the beer maker.

The heat insulating wall cover 104 and 105 may surround the entire circumferential surface of the heat insulating wall 102, and surround only a portion of the circumferential surface of the heat insulating wall 102.

A side opening may be formed in a surface of the heat insulating wall cover 104 and 105, which faces the water tank 51. The extending tube of the evaporator 134 may be disposed to pass through the side opening. The extending tube of the evaporator 134 may extend to an accommodation space S5 shown in FIG. 4, which will be described later, by passing through the side opening of the heat insulating wall cover 104 and 105.

Meanwhile, the water tank 51 may be spaced apart from the base 100 at the top side of the base 100. The water tank 51 may be spaced apart from the base 100 in the vertical direction. A space S3 in which at least one of the compressor 131, the water supply heater 53, and the water supply pump 52 is to be accommodated may be formed between the water tank 51 and the base 100. In addition, the water tank 51 may be spaced apart from the heat insulating wall 102 in the horizontal direction.

The beer maker may include a water tank supporter 106 supporting the water tank 51 to be spaced apart from the base 100. The water tank supporter 106 may be disposed at the base 100, and support the water tank 51 to be spaced apart from the base 100 at the top side of the base 100. The bottom end of water tank supporter 106 may be placed on the base 100, and the water tank 51 may be placed at an upper portion of the water tank supporter 106.

The water tank supporter 106 may be configured such that a plurality of supporter members are entirely coupled in a hollow cylindrical shape. A side opening may be formed in a surface of the water tank supporter 106, which faces the heat insulating wall 102.

The water tank 51 may include an outer water tank 58, and an inner water tank 59 accommodated in the outer water tank 58, the inner water tank 59 in which a space S4 having water accommodated therein is formed.

The outer water tank 58 may be placed at an upper portion of the water tank supporter 106, and the bottom surface of the outer water tank 58 may be spaced apart from the top surface of the base 100. The space S3 in which at least one of the compressor 131, the water supply heater 53, and the water supply pump 52 is to be accommodated may be formed between the outer water tank 58 and the base 100.

The outer water tank 58 may have a vessel shape of which top surface is opened, and protect the inner water tank 59 by surrounding the outer circumferential and bottom surfaces of the inner water tank 59 located therein.

The inner water tank 59 may be inserted into the outer water tank 58, and be supported by the outer water tank 58.

The beer maker may further include a water tank protector 107 disposed at the top side of the outer water tank 58 to surround an upper outer circumferential surface of the inner water tank 59. The water tank protector 107 may be disposed to surround the entire or a portion of the upper outer circumferential surface of the inner water tank 59. The water tank protector 107 may be configured such that a plurality of protector members are coupled in a ring shape.

The beer maker may further include a water tank lid 108 coupled to the water tank 51 or the water tank protector 107 to cover the top surface of the water tank 51. One side of the water tank lid 108 may be rotatably connected to the water tank 51 or the water tank protector 107. The water tank lid 108 may be separably mounted on the top surface of the water tank 51 or the water tank protector 71.

Meanwhile, at least one of the compressor 131, the water supply heater 53, and the water supply pump 52 may be disposed between the base 100 and the water tank 51.

The condenser 132 may be disposed to face at least one of the space between the heat insulating wall 102 and the water tank 51, and the heat insulating wall 102.

The supplier 3 may be disposed between the fermentation tank cover 114 and the water tank 51. In this case, the beer maker may be compactly manufactured as compared with when the supplier 3 is located at a position except the space between the fermentation tank cover 114 and the water tank 51, and the supplier 3 may be protected by the fermentation tank cover 114 and the water tank 51.

As shown in FIG. 4, one side of the supplier 3 may be mounted on the outer water tank 58, and the other side of the supplier 3 may be mounted on the heat insulating wall cover 104 and 105. The supplier 3 may be vertically spaced apart from the base 100 at the top side of the beer maker.

The supplier 3 may include a capsule accommodation body 36 having the capsule accommodation part in which the capsules C1, C2, and C3 shown in FIG. 1 are attacha-bly/detachably accommodated, and a lid module 37 covering the capsule accommodation part.

One side plate facing the water tank 51 among left and right side plates of the capsule accommodation body 36 may be mounted on a mounting part formed in the outer water tank 58 to be supported by the outer water tank 58.

The other side plate facing the fermentation tank cover 114 among the left and right side plates of the capsule accommodation body 36 may be mounted on the heat insulating wall cover 104 and 105, and be supported by the heat insulating wall cover 104 and 105.

The lid module 37 may include a lid 38 covering the capsule accommodation body 36. The lid 38 may be slidingly disposed at the capsule accommodation body 36 or be rotatably connected to the capsule accommodation body 36. The lid 38 may be hinge-connected to the capsule accommodation body 36.

The supplier 3 may be installed to be located at an approximately central upper portion of the beer maker, and the user may easily mount or separate the capsules C1, C2, and C3 by upwardly rotating the lid module 37 of the supplier 3 as will be explained later.

The accommodation space S5 in which a plurality of parts are to be accommodated may be formed in the beer maker. Here, the accommodation space S5 may be a space that becomes a space between the heat insulating wall 102 and the water tank 51 in the left-right direction and becomes a space between the supplier 3 and the base 100 in the top-bottom direction.

In the beer maker, a plurality of parts are preferably accommodated in the accommodation space S5. In this case, the beer maker may become compact. The plurality of parts accommodated in the accommodation space S5 may be protected by being surrounded by the heat insulating wall 102, the water tank 51, the base 100, the supplier 3, the condenser 132, and a center cover 66 which will be described later.

The opening/closing valves 313, 323, and 333 installed in the supplier entrance flow paths 311, 321, and 331 shown in FIG. 1 to open/close the supplier entrance flow paths 311, 321, and 331, may be located under the capsule accommodation body 36, as shown in FIG. 4.

The opening/closing valves 313, 323, and 333 may be installed in a bracket 64 (see FIG. 3) disposed at the base 100.

The bracket 64 may be disposed to be located at a side of the heat insulating wall 102, and the opening/closing valves 313, 323, and 333 may be installed to be located between the heat insulating wall 102 and the water tank 51 by the bracket 64. The opening/closing valves 313, 323, and 333 may be located between the heat insulating wall 102 and the water tank 51 in the left-right direction, and be located between the base 100 and the supplier 3 in the top-bottom direction.

The beer maker may further include the center cover 66 covering the front of the opening/closing valves 313, 323, and 333.

The center cover 66, as shown in FIG. 2, may be disposed to cover between the heat insulating wall cover 104 and the water tank supporter 106 in the left-right direction and cover between the supplier 3 and the base 100 in the top-bottom direction. The rear surface of the center cover 66 may face the condenser 132 in the front-rear direction, and protect a plurality of parts.

In addition, a front portion of the supplier 3 may be placed on the top end of the center cover 66, and the supplier 3 may be supported by the center cover 66.

Meanwhile, the beer extraction valve 62 may be mounted to the center cover 66. The beer extraction valve 62 may be mounted to protrude forward from the center cover 66. The beer extraction valve 62 may be mounted to the center cover 66 to be located at the top side of the beer container 101.

The beer maker may include a controller 109 (see FIG.3) that controls the beer maker.

The controller 109 may include a main PCB 109C.

The controller 109 may include a wireless communication element that performs wireless communication with a wireless communication device such as a remote controller or a portable terminal. The wireless communication element, such as a Wi-Fi module or a Bluetooth module, is not limited to its kind as long as it can perform wireless communication with a remote controller or a wireless communication device. The wireless communication element may be mounted on the main PCB 109C or a display PCB which will be described later.

The controller 109 may include an input unit that receives a command related to the manufacturing of the beer maker. As shown in FIG. 2 and FIG. 3, the input unit may include a rotary knob 109A and a rotary switch 109B switched by the rotary knob 109A. A knob hole 106A through which the rotary knob 109A rotatably passes may be formed at one side of the water tank supporter 106. The rotary knob 109A may be disposed such that at least one portion of the rotary knob 109A is exposed to the outside. The rotary switch 109B may be mounted on the main PCB 109C. The input unit may include a touch screen that receives a command of the user in a touch scheme. The touch screen may be provided in a display 109D which will be described later. The user may input a command through the remote controller or the wireless communication device, and the controller 109 may receive the command of the user through the wireless communication element.

The controller 109 may include the display 109D that displays various information of the beer maker. The display 109D may include a display element such as LCD, LED, or OLED. The display 109D may include the display PCB on which the display element is mounted. The display PCB may be mounted on the main PCB 109C or be connected to the main PCB 109C through a separate connector.

The display 109D may display information input by the input unit.

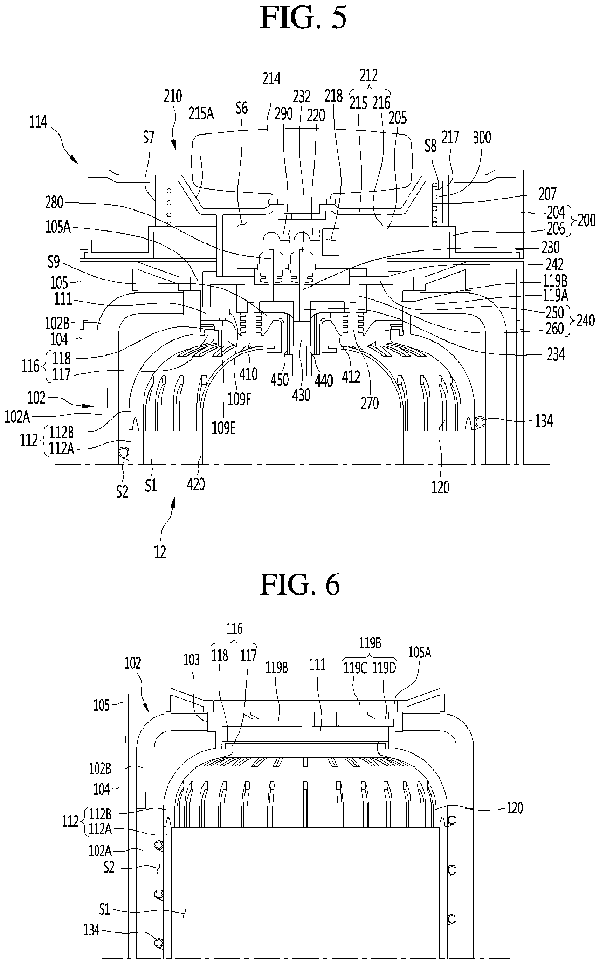

The display 109D may display information of the beer brewing pack 12 and information on a fermentation time of beer materials, a beer completion time, or the like. The fermentation time of the beer materials or the beer completion time may be changed depending on kinds of the beer materials contained in the beer brewing pack 12. If beer brewing pack 12 approaches the fermentation tank assembly 11, the controller 109 may acquire information from the beer brewing pack 12 through a communication module such as NFC. A compact chip 109E (see FIG. 5) in which various information related to the beer materials may be attached in the shape of a sticker, etc. to the beer brewing pack 12, and the chip 109E and an NFC tag 109F (see FIG. 5) that transmits/receives data may be installed in the beer maker. The NFC tag 109F may be mounted on the fermentation tank assembly 11, the main PCB 109C, or the display PCB. When the NFC tag 109F is mounted on the fermentation tank assembly 11, the NFC tag 109F may be mounted on the opening 111 of the fermentation tank 112 or the fermentation tank cover 114. The NFC tag 109F may be connected to the controller 109 through a data line.

If the beer brewing pack 12 is accommodated in the fermentation tank assembly 11, the controller 109 may acquire information of the beer brewing pack 12 from a chip provided in the beer brewing pack 12.

The controller 109 may transmit the information acquired from the NFC tag 109F to the display 109D or the wireless communication device, and the display 109D or the wireless communication device may display kinds of beer materials, a total fermentation time, a beer completion time, or the like.

The display 109D may display various information related to brewing of beer while the beer is being brewed. The controller 109 may be connected to the temperature sensor 16. The controller 109 may transmit information on a temperature sensed by the temperature sensor 16 to the display 109D or the wireless communication device, and the display 109D or the communication device may display the temperature sensed by the temperature sensor 16 through a numerical value, a graph, or the like.

The display 109D may display a completion degree of the beer, an amount of carbonic acid contained in the beer, or the like through a numerical value, a graph, or the like while the beer is being brewed.

The display 109D may differently display a completion degree of the beer in primary fermentation and a completion degree of the beer in secondary fermentation. The amount of carbonic acid in the beer of the beer brewing pack 12 may be gradually increased as time elapses. The controller 109 may detect a pressure in the beer brewing pack 12 through the pressure sensor 72, and detect a temperature of the fermentation tank assembly 11 through the temperature sensor 16. The controller 109 may calculate an amount of carbonic acid using the detected pressure and temperature according to a preset equation or table. The controller 109 may transmit information on the calculated amount of carbonic acid to the display 109D or the wireless communication device, and at least one of the display 109D and the wireless communication device may display the calculated amount of carbonic acid.

The display 109D may display a remaining amount of the beer after the beer is completely brewed.

If the secondary fermentation which will be described later is ended, the controller 109 may determine that the beer has been completely brewed.

The controller 109 may add up at least one of a time at which a micro switch 630 which will be described later is on, a time at which the air pump 152 is driven, and a time at which the main valve 9 is on after the beer is completely brewed. The controller 109 may calculate an extraction amount of the beer according to the added-up time, and calculate a remaining amount of the beer from the calculated extraction amount. The controller 109 may transmit information on the remaining amount of the beer to the display 109D or the wireless communication device, and at least one of the display 109D and the wireless communication device may display the remaining amount of the beer.

FIG. 5 is a sectional view illustrating an inside of the fermentation tank assembly of the beer maker according to the embodiment. FIG. 6 is a sectional view when the opening shown in FIG. 5 is opened.

An upper through-hole 105A disposed such that a portion of the fermentation tank cover 114 passes therethrough may be formed at an upper portion of the heat insulating wall cover 104 and 105. The upper through-hole 105A may be formed to be opened in the top-bottom direction in the upper heat insulating wall cover 105.

The fermentation tank 112 may include the seat part 116 on which an upper portion of the beer brewing pack 12 is mounted.

The seat part 116 may include a sealing member supporting bump 117 protruding from the fermentation tank 112 and a fermentation tank sealing member 118 placed on the sealing member supporting bump 117.

The sealing member supporting bump 117 may protrude in a ring shape in the opening 111.

The fermentation tank sealing member 118 may be placed on the top surface of the sealing member supporting bump 117.

A circumferential portion of the beer brewing pack 12 may be placed on the top surface of the fermentation tank sealing member 118, and the inside of the fermentation tank 112 may be sealed by the beer brewing pack 12 and the fermentation sealing member 118.

An inserting guide 119B into an inserting projection 119A formed at the fermentation tank cover 114 is rotatably inserted may be formed in the opening 111 of the fermentation tank 112. The inserting guide 119B may be formed at a portion of the opening 111 of the fermentation tank 112. The inserting guide 119B may include a vertical guide groove 119C through which the inserting projection 119A passes approximately in the top-bottom direction, and a horizontal guide groove 119D formed long in the circumferential direction along the opening 111 at a lower portion of the vertical guide groove 119C to guide movement of the inserting projection 119A.

The inserting projection 119A may be protrude in the horizontal direction at a position capable of facing the opening 111 of the fermentation tank 112 when the fermentation tank cover 114 is closed.

The inserting guide 119B may be formed in a recessed shape at a higher position than the sealing member supporting bump 117.

A plurality of ribs 120 that allow a flexible container 420 of the beer brewing pack 12, which will be described later, to be spaced apart from the inner surface of the fermentation tank 112 may protrude from the inner wall of the fermentation tank 112. As materials are fermented, gas may be generated in the beer brewing pack 12, and the flexible container 420 may be expanded by the gas in the beer brewing pack 12. In the beer maker, when beer is extracted, air supplied from the beer extraction pressurizing device 15 shown in FIG. 6 may be introduced between the flexible container 420 and the inner surface of the fermentation 112, and the plurality of ribs 120 formed on the inner wall of the fermentation tank 112 may assist smooth flow of the air supplied to the inside of the fermentation tank 112 from the beer extraction pressurizing device 15.

The plurality of ribs 210 may be formed long in the top-bottom direction. The plurality of ribs 120 may be spaced apart from one another in the circumferential direction of the fermentation tank 112 along the inner surface of the fermentation tank 112.

The plurality of ribs 120, referring to FIG. 4, may be formed at each of upper and lower portions of the inner wall of the fermentation tank 112.

Hereinafter, the fermentation tank cover 114 will be described in detail.

The fermentation tank cover 114 may include an outer body 200, an inner body 210 rotatably disposed at the outer body 200, and a lower body assembly 240 coupled to a lower portion of the inner body 210, the lower body assembly 240 including a main flow path part 230 to which the main tube 220 is connected. An inner space S6 may be formed in at least one of the inner body 210 and the lower body assembly 240. In addition, at least one portion of the main tube 220 may be accommodated in the inner space S6. The main tube 220 may be connected to the main flow path 230 in the inner space S6 of the main tube 220.

The lower body assembly 240 may include a lower body 250 coupled to the inner body 210, and a flow path body 260 in which the main flow path part 230 is formed.

The outer body 200 may form an appearance of the circumferential surface of the fermentation tank cover 114. The fermentation tank cover 114 may be hinge-connected to the fermentation tank 112 or the heat insulating wall cover 105. In this case, the outer body 200 may be hinge-connected to the fermentation tank 112 or the heat insulating wall cover 105. The outer body 200 may be mounted on the top surface of the heat insulating cover 105. The outer body 200 is preferably connected to the heat insulating wall cover 105 by a hinge.

An inner body accommodation space S7 in which the inner body 210 can be rotatably accommodated may be formed in the outer body 200.

The outer body 200 may surround the outer circumference of the inner body 210 accommodated in the inner body accommodation space S7, and protect the outer circumference of the inner body 210.

The inner body 210 may be disposed in the inner body accommodation space S7 to rotate about a vertical center axis.

The inner body 210 may include an inner frame 212 rotatably disposed in the outer body 200, the inner frame 212 having the inner space S6 formed at a lower portion thereof.

The inner body 210 may include a handle 214 disposed at the top surface of the inner frame 212. The user may rotate the inner body 210 about the vertical center axis of the inner body 210 while grasping the handle 214. When the inner body 210 is rotated, the lower body assembly 240 may be rotated together with the inner body 210.

The inner frame 212 may include an inner upper body part 215, an inner lower body part 216 protruding from the bottom surface of the inner upper body part 215, the inner lower body part 216 having the inner space S6 formed therein, and an outer hollow part 217 protruding at the outer circumference of the inner upper body part 216, the outer hollow part 217 being spaced apart from the inner lower body part 216.

A tube through-hole 218 through which the main tube 220 and a sub-tube 290 which will be described later pass may be formed in the inner frame 212. The tube through-hole 218 may be a hole through which the main tube 220 and the sub-tube 290, extending to the outside from the inner space S6, pass. The tube through-hole 218 is preferably formed at one side of the inner lower body part 216.

The inner upper body part 215 may include a handle accommodation groove part 215A in which at least one portion of the handle 214 is accommodated. The handle accommodation groove part 215A may be formed in a downwardly recessed shape, and be formed larger than the handle 214.

The inner lower body part 216 may protrude in a hollow cylindrical shape from the bottom surface of the inner upper body part 215. The inner space S6 may be formed in the inner lower body part 216 such that the bottom surface of the inner space S6 is opened.

The outer hollow part 217 may be formed to protrude in the lower direction at the outer circumference of the inner upper body part 215. The outer hollow part 217 may be configured as a hollow cylindrical part formed larger than the inner lower body part 216. The outer hollow part 217 may be in surface contact with the inner circumferential surface of the outer body 200, and be supported by the outer body 200.

Meanwhile, the outer body 200 may include an outer frame 204 and an outer base 206 coupled to the outer frame 204, the outer base 206 including an inner body through-hole 205 through which the inner body 210 passes.

The outer body 200 may include an inner hollow part 207 having a smaller size than the outer hollow part 217, the inner hollow part 207 facing the outer hollow part 217. A return spring accommodation space S8 in which a return spring 300 which will be described later is accommodated may be formed between the inner hollow part 207 and the outer hollow part 217.

The inner hollow part 207 may protrude from the top surface of the outer base 206. The inner hollow part 207 may be formed to have a smaller size than the outer hollow part 217 of the inner body 210.

The main tube 220 and the main flow path part 230 may constitute the main flow path connecting part 115 shown in FIG. 1. The main tube 220 may constitute a portion of the main flow path 2 shown in FIG. 1, and the main flow path part 230 may constitute the main flow path connecting part 115 shown in FIG. 2.

The main tube 220 may extend to the outside of the fermentation tank cover 114 through the tube through-hole 218 formed in the fermentation tank cover 114.

The main flow path part 230 may include an upper flow path part 232 protruding to the inner space S6 at an upper portion of the flow path body 260, and a lower flow path part 234 protruding toward the space S1 of the fermentation tank 112 at a lower portion of the flow path body 260.

A lower portion of the main flow path part 230 may be in contact with a pack main flow path formed in the beer brewing pack 12, which will be described later. The main flow path part 230 may communicate with the pack main flow path of the beer brewing pack 12.

The lower body assembly 240 may be coupled to the inner frame 212 to seal the inner space S6.

An inner frame insertion groove part 242 into which a bottom end of the inner frame 212 is inserted may be formed in the lower body assembly 240.

The lower body 250 may be coupled to a lower portion of the inner body 210, and at least one portion of the lower body 250 may be inserted into the opening 111.

The inserting projection 119A sliding along the inserting guide 119B formed in the opening 111 of the fermentation tank 112 may be formed at the outer circumferential surface of the lower body 250.

The flow path body 260 may be installed at the lower body 250.

The fermentation tank cover 114 may include a lower sealing member 270 mounted to at least one of the lower body 250 and the flow path body 260, the lower sealing member 270 being adhered closely to the beer brewing pack 12.

A communication path S9 that guides gas extracted from the beer brewing pack 12 to a sub-flow path part 280 which will be described later may be formed in the lower sealing member 270. The lower sealing ember 270 may be a hollow elastic member having the communication path S9 formed therein.

A portion of the main flow path part 230 may protrude to the communication path S9, and the lower sealing member 270 may protect the main flow path part 230.

Meanwhile, the sub-flow path part 280 communicating with the communication path S9 may be formed in the vicinity of the main flow path part 230.

The sub-flow path part 280 may be formed in the flow path body 260.

The sub-tube 290 that guides gas passing through the sub-flow path part 280 may be connected to the sub-flow path part 280. At least one portion of the sub-tube 290 may be accommodated in the inner space S6. The sub-tube 290 may extend to the outside of the fermentation tank cover 114 through the tube through-hole 218 formed in the fermentation tank cover 114.

The gas extraction flow path 71 shown in FIG. 1 may be connected to the sub-tube 290, and the sub-tube 290 may constitute a portion of the gas extraction flow path 71 shown in FIG. 1.

The pressure sensor 72 shown in FIG. 1 may sense a pressure of the gas passing through the sub-tube 290.

When the gas opening/closing valve 73 shown in FIG. 1 is opened, gas in the beer brewing pack 12 may sequentially pass through a gas discharge flow path 450 formed in the beer brewing pack 12, the communication path S9 of the lower sealing member 270, the sub-flow path part 270, and the sub-tube 290 and then flow in the pressure sensor 72. The pressure sensor 72 may sense a pressure of the gas in the beer brewing pack 12 in a state in which the fermentation tank cover 114 is not opened.

The fermentation tank cover 114 may further include the return spring 300 connected to the outer body 200 and the inner body 210. One end of the return spring 300 may be connected to the outer body 200, and the other end of the return spring 300 may be connected to the inner body 210. The return spring 300 may be configured as a coil spring. When the user holds and turns the handle 214 of the inner body 210, the return spring 300 may be elastically deformed, and a return force that rotates the inner body 210 in the opposite direction may be applied to the inner body 210.

Meanwhile, the beer brewing pack 12 may include a pack body 410, the flexible container 420 connected to the pack body 410, the flexible container 420 accommodating beer materials therein, a main flow path body 440 provided in the pack body 410, the main flow path body 440 having an inner hollow part 430 formed therein. The gas discharge flow path 450 through which the gas in the beer brewing pack 12 is discharged may be formed in the beer brewing pack 12.

A sealing member mounting groove part 412 on which a lower portion of the lower sealing member 270 is inserted and mounted may be formed at the top surface of the pack body 410. The sealing member mounting groove part 412 may be formed in a shape recessed downward from the top surface of the pack body 410. The sealing member mounting groove part 412 may be formed in a ring shape at the top surface of the pack body 410. The bottom end of the lower sealing member 270 as a hollow elastic member may be placed on the sealing member mounting groove part 412.

When the beer brewing pack 12 is inserted into the fermentation tank 112 to be mounted on the seat part 116, the inner hollow part 430 of the beer brewing pack 12 and the gas discharge flow path 450 of the beer brewing pack 12 may face upward. The inner hollow part 430 of the beer brewing pack 12 and the gas discharge flow path 450 of the beer brewing pack 12 may be exposed to the inside of the opening 111 of the fermentation tank 112.

The fermentation tank cover 114 may fall down to cover the opening 111 of the fermentation tank 112 after the beer brewing pack 12 is mounted in the fermentation tank 112. When the inner body 240 is rotatably inserted into the opening 111 by a manipulation of the handle 214, the lower sealing member 270 of the fermentation tank 114 may be mounted on the sealing member mounting groove part 412. The lower sealing member 270 of the fermentation tank cover 114 may surround the upper outer circumference of the main flow path body 440.

When the fermentation tank cover 114 is inserted into the fermentation tank 112 while covering the opening 111 of the fermentation tank 112 as described above, a lower portion of the main flow path part 230 of the flow path body 260 may communicate with the inner hollow part 430 of the beer brewing pack 12, and the gas discharge flow path 450 of the beer brewing pack 12, the communication path S9 of the lower sealing member 270, and the sub-flow path part 280 of the flow path body 260 may sequentially communicate with each other.

That is, in a state in which the fermentation tank cover 114 closes the opening 111 of the fermentation tank 112, a supply path along which the main tube 220, the main flow path part 230 of the flow path body 260 and the inner hollow part 430 of the beer brewing pack 12 are sequentially continued may be formed in the fermentation tank assembly 11. In addition, a beer extraction path along which the inner hollow part 430 of the beer brewing pack 12, the main flow path part 230 of the flow path body 260, and the main tube 220 are sequentially continued may be formed in the fermentation tank assembly 11. In addition, a gas discharge path along which the gas discharge flow path 450 of the beer brewing pack 12, the communication path S9 of the lower sealing member 270, the sub-flow path part 280 of the flow path body 260, and the sub-tube 290 are sequentially continued may be formed in the fermentation tank assembly 11.

In the beer maker, the supply of material, the extraction of beer, and the calculation of a fermentation degree of the beer can be performed in a state in which the fermentation tank cover 114 is not opened but closed.

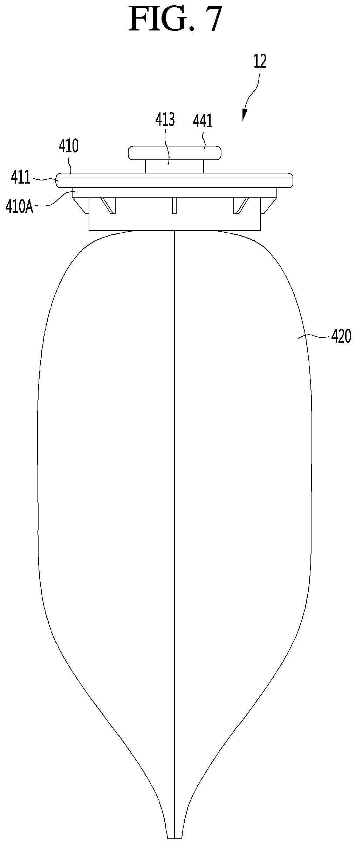

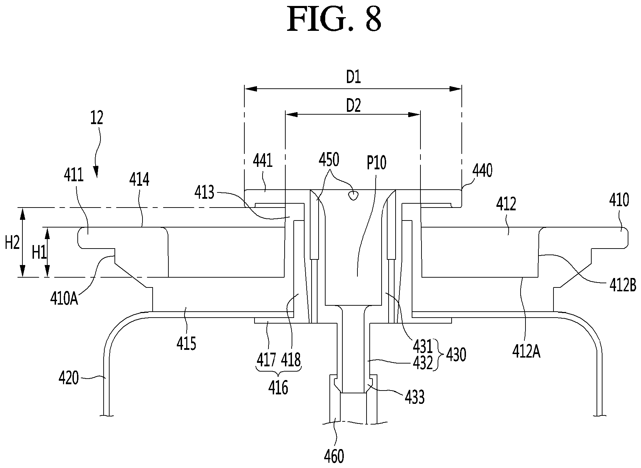

FIG. 7 is a side view illustrating an example of the beer brewing pack of the beer maker according to the embodiment. FIG. 8 is a sectional view illustrating the example of the beer brewing pack of the beer maker according to the embodiment.

The beer brewing pack 12 may include a pack body 410 including a mounting part 411 mounted in the fermentation tank assembly 11 shown in FIGS. 5 and 6, the pack body 410 having an outer hollow part 413 protruding therefrom; the flexible container 420 coupled to the pack body 410; the main flow path body 440 including the inner hollow part 430 inserted and accommodated in the outer hollow part 413, and the main flow path body 440 having a handle part 441 located at the top of the outer hollow part 413; and a flexible tube 460 connected to the inner hollow part 430, the flexible tube 460 protruding to the inside of the flexible container 420.

The external diameter of the pack body 410 may be smaller than the internal diameter of the opening 111 of the fermentation tank 112 shown in FIGS. 5 and 6, and be greater than the internal diameter of the seat part 116 shown in FIGS. 5 and 6.

The mounting part 411 may be placed and mounted on the seat part 116 shown in FIG. 6. The mounting part 411 may be a part protruding to have a thinner thickness than the other part along an outer circumference 410A of the pack body 410. The mounting part 411 may protrude in the radial direction from the pack body 410. The mounting part 411 may be formed in a ring shape along the outer circumference 410A of the pack body 410.

The beer brewing pack 12, as shown in FIG. 5, may be easily mounted in the fermentation tank 112 through a simple operation of inserting the flexible container 420 into the space S1 of the fermentation tank 112 and placing the mounting part 411 on the seat part 116 shown in FIG. 5.

A recessed part may be formed at the top surface of the pack body 410. The recessed part formed at the top surface of the pack body 410 may be concavely recessed at the top surface of the pack body 410 such that a portion of a finger of the user is easily inserted thereinto. The recessed part formed at the top surface of the pack body 410 may be the sealing member mounting groove part 412 shown in FIG. 5. The recessed part may assist the user to easily grasp the handle part 441 of the main flow path body 440 when the beer brewing pack 12 is carried. When the beer brewing pack 12 is mounted in the fermentation tank 112 as shown in FIG. 5, the recessed part may be in contact with the lower sealing member 270 of the fermentation tank cover 114. Hereinafter, for convenience, the recessed part will be described using the same reference numeral as the sealing member mounting groove part.

The outer hollow part 413 may protrude in the upper direction at the center of the pack body 410.

The outer hollow part 413 may protrude in the upper direction from a bottom surface 412A of the recessed part 412. The outer hollow part 413 may protruded higher than a height H1 of the recessed part 412. A height H2 of the outer hollow part 413 may be higher than the height H1 of the recessed part 412. The outer hollow part 413 may support the handle part 441 of the main flow path body 440 such that the handle part 441 is located higher than a top surface 414 of the pack body 410.

The flexible container 420 may be joined with the pack body 410 to be integral with the pack body 410. A portion of the flexible container 420 may be inserted into the pack body 410.

The pack body 410 may be configured by joining a plurality of members, and the flexible container 420 may be fixed to the pack body 410 by joining a plurality of members in a state in which portions of the flexible container 420 are inserted between the plurality of members.

The pack body 410 may include a main body 415 having the mounting part 411 and the outer hollow part 413, formed therein, and a joining body 416 joined with the main body 415, the joining body 416 being joined with the flexible container 420.

The joining body 416 may include a joining part 417 joined with the flexible container 420, the joining part 417 disposed under the main body 415, and a center hollow part 418 inserted into the outer hollow part 413 at the joining part 417, the center hollow part 413 joined with the main body 415.

The top surface of the joining part 417 may face the bottom surface of the main body 415. The joining part 417 may include a ring-shaped plate body in which the flexible container 420 is joined with the top surface thereof.

When the inner hollow part 430 of the main flow path body 440 is inserted into the outer hollow part 413, the center hollow part 418 may be located between the inner circumferential surface of the outer hollow part 413 and the outer circumferential surface of the inner hollow part 430.

The inner hollow part 430 may include an upper hollow part 431 disposed in the outer hollow part 413, and a tube connecting part 432 protruding at a lower portion of the upper hollow part 431, the tube connecting part 432 having a smaller diameter than the upper hollow part 431, the tube connecting part 432 being connected to the flexible tube 460.

The inner hollow part 430 may be separably inserted into the pack body 410. When the inner hollow part 430 is inserted into the pack body 410, the inner hollow part 430 may be inserted into the pack body 410 to be in surface contact with the hollow part 413 and the center hollow part 418. The inner hollow part 430 may be inserted into the pack body 410 to be capable of being escaped from the pack body 410 when the user strongly pulls the handle part 441 in the upper direction.

The main flow path body 440 may be separable from the pack body 410. When a pack main flow path P10 is blocked or when the flexible tube 460 is not normally spread or bent, the main flow path body 440 may be separated from the pack body 410. The user may take an action of replacing the main flow path body 440 or the flexible tube 460.

The pack main flow path P10 may be formed in the inner hollow part 430. The pack main flow path P10 may be formed long in the top-bottom direction in the inner hollow part 430. The pack main flow path P10 may be formed at the upper hollow part 431 and the tube connecting part 432. The pack main flow path P10 may be formed long in the top-bottom direction from the top end of the upper hollow part 431 to the bottom end of the tube connecting part 432. The pack main flow path P10 may be formed such that an area of the upper hollow part 431 is wider than that of the tube connecting part 432.

At least one gas discharge flow path 450 may be formed in the vicinity of the pack main flow path P10 in the upper hollow part 431. A plurality of gas discharge flow paths 450 may be formed in parallel to the pack main flow path P10 between the pack main flow path P10 and the outer circumferential surface of the upper hollow part 431.

The tube connecting part 432 may include a flexible tube attaching/detaching part 433 to/from which the flexible tube 460 is attached/detached.

The handle part 441 of the main flow path body 440 may be formed to protrude at an upper portion of the inner hollow part 430. The handle part 441 may be formed in a hollow disk shape at the upper portion of the inner hollow part 430. The user may carry the beer brewing pack 12 while grasping the mounting part 411 or the handle part 441. An outer diameter D1 of the handle part 441 may be greater than that D2 of the outer hollow part 413. The bottom surface of the handle part 441 may be placed on the top end of the outer hollow part 413. The handle part 412 has a smaller size than the recessed part 412. The handle part 441 may be spaced apart from the top surface 414 of the pack body 410 and a circumferential surface 412B of the recessed part 412.

The user may grasp the handle part 441 of the main flow path body 440 while putting a finger of the user in the recessed part 412, and carry the beer brewing pack 12 to the upper side of the fermentation tank 112 shown in FIG. 6. The user may insert the flexible container 420 into the space S1 of the fermentation tank 112, and place the mounting part 411 on the seat part 116 as shown in FIG. 5. Thus, beer brewing pack 12 can be simply mounted in the fermentation tank 112.

Meanwhile, when the user extracts the beer brewing pack 12 from the fermentation tank 112, the user may grasp the handle part 441 of the main flow path body 440 with a hand of the user by putting a hand of the user in the opening of the fermentation tank 112, and upwardly lift the beer brewing pack 12. The beer brewing pack 12 may be escaped to the upper side of the opening 111 of the fermentation tank 112. Thus, the beer brewing pack 12 can be easily extracted from the fermentation tank 112.

The flexible tube 460 may guide water or air guided to the pack main flow path P10 to a deep position in the flexible container 420, and beer contained at a lower portion of the flexible container 420 may easily flow in the pack main flow path P10 through the flexible tube 460.

The flexible tube 460 may be roundly curved or bent at least once in the flexible container 420. The flexible tube 460 may be curved or bent before the beer brewing pack 12 is inserted into the fermentation tank 112. When air or hot water is supplied to the pack main flow path P10, the flexible tube 460 may be spread long in the length direction by the air or hot water.

When the flexible container 420 is maximally expanded, the flexible tube 460 may have a length where the bottom end of the flexible tube 460 is spaced apart from the inner bottom end of the flexible container 420.

The bottom end of the flexible tube 460 may be sharply formed, and have a shape of which portion is opened in the circumferential direction thereof.

The flexible tube 460 may have a lower hardness than the main flow path body 440. The flexible tube 460 is preferably connected to the tube connecting part 432 of the main flow path body 440 after the flexible tube 460 is manufactured separately from the main flow path body 440.

The flexible tube 460 may be not connected to the main flow path body 440, but may be a hollow part through which a fluid can pass may integrally protrude long at a lower portion of the main flow path body 440. However, in this case, the compactness of the beer brewing pack 12 may not be easily achieved, or it may be inconvenience for the user to grasp the handle part 441 with a hand of the user, depending on the hardness of the main flow path body 440. More specifically, the hardness of the entire main flow path body 440 may be formed low such that the hollow part can be curved or bent. In this case, when the user grasps the handle part 441 of a hand of a user, the handle part 441 may also be curved or bent by the hand of the user. In addition, it may not be easy for the user to grasp the handle part 441 with the hand of the user.

On the contrary, the hardness of the entire main flow path body 440 including the hollow part may be formed high such that the hardness of the handle part 441 increases. In this case, the main flow path body 440 may have a structure in which the hollow part is not curved or bent, and the compactness of the beer brewing pack 12 may not be easily performed.

That is, the flexible tube 460 is preferably connected to the main flow path body 440 after the main flow path body 440 and the flexible tube 460 are manufactured separately from each other. The user can easily grasp the handle part having a high hardness with a hand of the user, and the flexible tube 460 having a relatively low hardness can assist the compactness of the beer brewing pack 12 as the hollow part is curved or bent in the flexible tube 460.

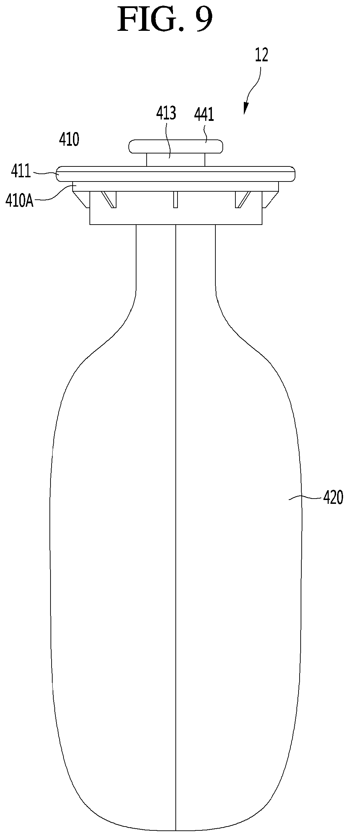

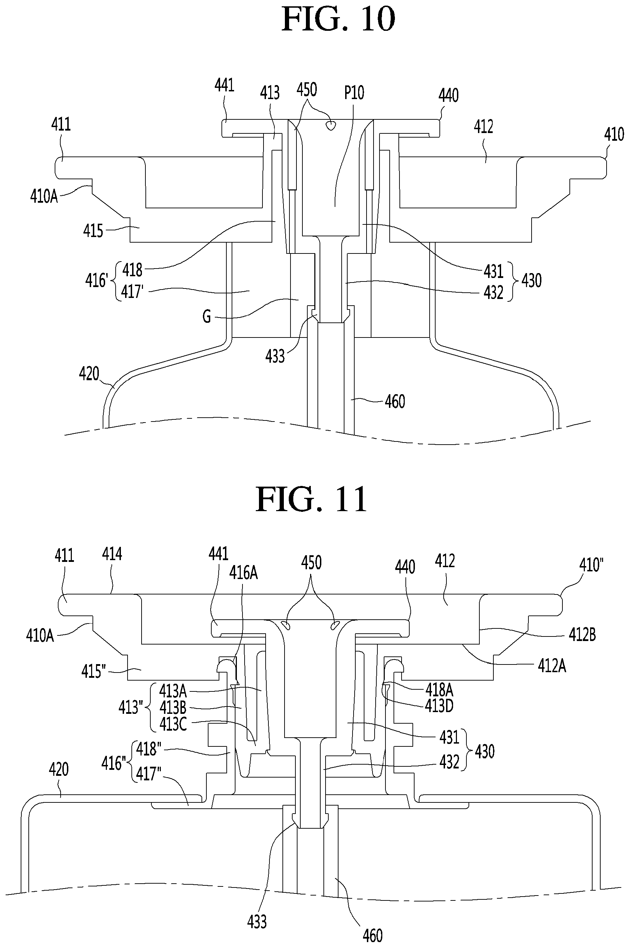

FIG. 9 is a side view illustrating another example of the beer brewing pack of the beer maker according to the embodiment. FIG. 10 is a sectional view illustrating the another example of the beer brewing pack of the beer maker according to the embodiment.

In the beer brewing pack 12 shown in FIGS. 9 and 10, a joining position of the flexible container 420 may be different from that in the example of the beer brewing pack shown in FIGS. 7 and 8, and a configuration of a joining body 416' may be different from that in the beer brewing pack shown in FIGS. 7 and 8.

The joining body 416' of the beer brewing pack 12 shown in FIGS. 9 and 10 may include a joining part 417' disposed on the bottom surface of the main body 415, and the joining part 417' having the flexible container 420 joined therewith, and the center hollow part inserted into the outer hollow part 413 at the joining part 417'. The joining part 417' may include a hollow body of which top surface faces the bottom surface of the main body 415, the hollow body having the flexible container 420 is joined with the circumferential surface thereof.

In the beer brewing pack shown in FIGS. 9 and 10, the other components except the joining body 416' are identical or similar to those in the example of the beer brewing pack shown in FIGS. 7 and 8. Therefore, like reference numerals are used for like components, and their descriptions are omitted.

The joining part 417' shown in FIGS. 9 and 10 may has a higher height than the tube connecting part 432, and surround the outer circumference of the tube connecting part 432. A gap G into which the flexible tube 460 is inserted may be formed between the outer circumferential surface of the joining part 417' and the tube connecting part 432.

The flexible tube 460 may be inserted into the joining part 417' to be connected to the tube connecting part 432.

The joining part 417' shown in FIGS. 9 and 10 may protect a connecting part between the tube connecting part 432 and the flexible tube 460 and the outer circumference of the tube connecting part 432 by surrounding the connecting part between the tube connecting part 432 and the flexible tube 460 and the outer circumference of the tube connecting part 432. Thus, damage of the tube connecting part 432 can be minimized.

FIG. 11 is a sectional view illustrating still another example of the beer brewing pack of the beer maker according to the embodiment.

In the beer brewing pack shown in FIG. 11, a protruding direction of an outer hollow part 413" and a detailed shape of the outer hollow part 413" may be different from those in the outer hollow part 413 of the pack body 410 shown in FIGS. 9 and 10. In addition, a pack body 410" may include a main body 415" and a connecting body 416", which are different from those of the pack body 410 shown in FIGS. 9 and 10.

In the beer brewing pack of this embodiment, configurations and operations of the flexible container, the main flow path body 440, and the flexible tube 460 except the pack body 410" are identical to those in the beer brewing pack shown in FIGS 9 and 10. Therefore, like reference numerals are used for like components, and their descriptions are omitted.

The pack body 410" may include the mounting part 411, the recessed part 412, and the outer hollow part 413", and the mounting part 411 and the recessed part 412 are identical to those in the beer brewing pack shown in FIGS. 9 and 10. Therefore, like reference numerals are used for like components, and their descriptions are omitted.

The outer hollow part 413" may protrude in the lower direction at the center of the pack body 410". The outer hollow part 413" may protrude in the lower direction under the recessed part 412.

The outer hollow part 413" may support the main flow path body 440 such that the handle part 441 of the main flow path body 440 is located higher than the bottom surface 412A of the recessed part 412 as the handle part 441 is located lower than the top surface 414 of the pack body 410".

The outer hollow part 413" may be formed to be elastically deformableed. The outer hollow part 413" may include a first hollow part 413A into which the inner hollow part 430 of the main flow path body 440 is inserted, a second hollow part 413B formed larger than the first hollow part 413A, the second hollow part 413B surrounding the outer circumference of the first hollow part 413A, and a connecting part 413C connecting the first hollow part 413A and the second hollow part 413B.

If necessary, the first hollow part 413A may be elastically deformed in a state in which the first hollow part 413A is connected to the second hollow part 413B through the connecting part 413C.

The pack body 410" may include the main body 415" in which the mounting part 411 and the outer hollow part 413" are formed, and the connecting body 416" connected to the main body 415" and the flexible container 420.

The connecting body 416" may include a lower hollow part 418" surrounding the outer circumference of the outer hollow part 413".

The lower hollow part 418" may be formed in a hollow cylindrical shape. The lower hollow part 418" may be attached/detached to/from the main body 415".

A lower hollow part inserting groove part 416A into which an upper portion of the lower hollow part 418" is inserted may be formed in the main body 415". The lower hollow part inserting groove part 416A may be formed to be recessed in the vicinity of the outer hollow part 413" of the main body 415".

The connecting body 416" may be separably connected to the main body 415".

A holding bump 413D may protrude from the outer surface of the outer hollow part 413", and a holding projection 418A mounted on the holding bump 413D to be held by the holding bump 413D may be formed at the inner circumferential surface of the lower hollow part 418".

When an upper portion of the connecting body 416" is inserted into the lower hollow part inserting groove part 416A, the holding projection 418A may be placed on the holding bump 413D to be held by the holding bump 413D. If an external force is not applied to the connecting body 416", a state in which the connecting body 416" is coupled to the main body 415" may be maintained.

The connecting body 416" may further include a joining part 417" protruding at a lower portion of the lower hollow part 418", the joining part 417" having the flexible container 420 joined with at least one of the top and bottom surfaces thereof.

The flexible container 420 may be thermally fused to the top or bottom surface of the joining part 417".

The top surface of the joining part 417" may face the bottom surface of the main body 415". The joining part 417" may include a ring-shaped plate body having the flexible container 420 joined with the top surface thereof.

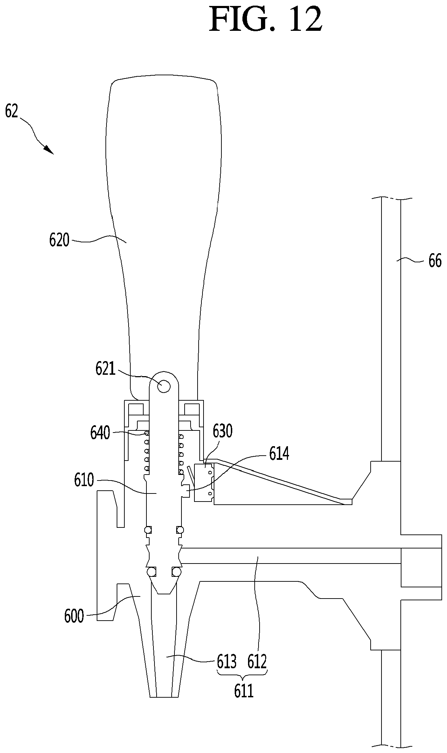

FIG. 12 is a sectional view illustrating the beer extraction valve of the beer maker according to the embodiment.

The beer extraction valve 62 may include a valve body 600 in which a valve flow path 611 connected to the beer extraction flow path 61 shown in FIG. 1 is formed; a lifting valve body 610 disposed in the valve body 600 to move up/down, the lifting valve body opening/closing the valve flow path 611; a rotating lever 620 rotatably connected to an upper portion of the lifting valve body 610 to moves up/down the lifting valve body 610 when the rotating lever 620 is rotated; and the micro switch 630 switched by the lifting valve body 610. The beer extraction valve 62 may further include a valve spring 640 built in the valve body 600 to elastically press the lifting valve body 610 in the lower direction.

The valve body 600 may be mounted to the center cover 66. The valve flow path 611 may include a horizontal flow path 612 formed long in the front-rear direction along the valve body 600, and a vertical flow path 613 formed to be bent in the lower direction at the front end of the horizontal flow path 612. Beer guided to the beer extraction flow path 61 shown in FIG. 1 may sequentially pass through the horizontal flow path 612 and the vertical flow path 613 when the horizontal flow path 612 is opened, and then drop downward from the vertical flow path 613. The valve body 600 may include a horizontal part in which the horizontal flow path 612 is formed, and a vertical part formed perpendicular to the horizontal part, the vertical part having the vertical flow path 613 formed therein.

The lifting valve body 610 may be disposed to move up/down in the valve flow path 611, particularly, the vertical flow path 613. The lifting valve body 610 may move down to a height at which the horizontal flow path 612 is blocked, and move up to a height at which the horizontal flow path 612 is opened. The lifting valve body 610 may be disposed such that an upper portion of the lifting valve body 610 protrudes upward of the valve body 600. A manipulating projection 614 that allows the micro switch 630 to be point-contacted when the lifting valve body 610 moves up may protrude at the lifting valve body 610.

The rotating lever 620 may be connected to the upper portion of the lifting valve body 610 by a hinge 621. The rotating lever 620 may be erected in the vertical direction or laid in the horizontal direction in a state in which the rotating lever 620 is connected to the lifting valve body 610.

When the rotating lever 620 is laid in the horizontal direction, the lifting valve body 610 may move up to open the horizontal flow path 612. When the rotating lever 620 is erected in the vertical direction, the lifting valve body 610 may move down to close the horizontal flow path 612.

The micro switch 630 may be connected to the controller 109 shown in FIG. 3, and the controller 109 may control the beer maker according to on/off of the micro switch 630.

The valve spring 640 may be disposed at an upper portion of the vertical part of the valve body 600 to elastically press the lifting valve body 610 in the lower direction.

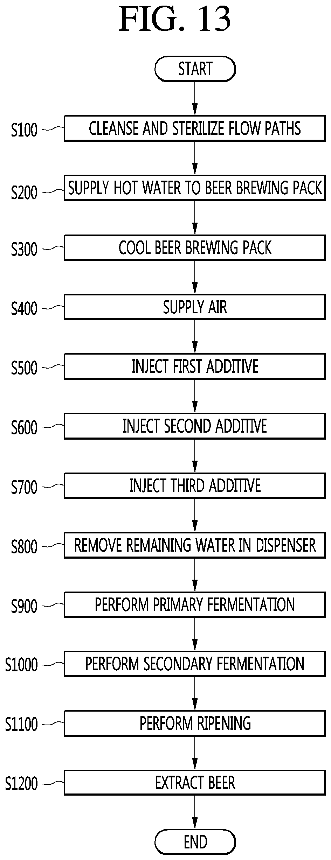

FIG. 13 is a flowchart illustrating a control sequence of the beer maker according to the embodiment.

The beer maker of this embodiment includes the controller 109. The user may input an operation command of the beer maker by manipulating a wireless communication device such as the rotary knob 109A, or a remote controller, or a portable terminal. The controller 109 may control the beer maker using a preset program according to a switching state of the rotary switch 109B or a signal applied to the wireless communication element. Here, the preset program may control the beer maker according to a beer brewing process of the beer maker.

Hereinafter, an operation of the beer maker of this embodiment will be described as follows.

The beer maker of this embodiment may include a cleansing and sterilizing course for cleansing and sterilizing flow paths in the beer maker. The cleansing and sterilizing course may be performed separately from a beer brewing course.

The cleansing and sterilizing course is preferably performed before the beer brewing course is performed.

In addition, the cleansing and sterilizing course may be performed by a user input during the beer brewing course. In this case, the cleansing and sterilizing course may be performed in a step in which the main valve 9 is closed and no additive is contained in the supplier 3, such as a primary fermentation step or secondary fermentation step which will be described later.

The cleansing and sterilizing course may be performed in a state in which the capsules C1, C2, and C3 are not accommodated in the supplier 3, and the beer brewing course may be performed in a state in which the capsules C1, C2, and C3 are accommodated in the supplier 3 and the beer brewing pack 12 is accommodated in the fermentation tank 112.

Hereinafter, the cleansing and sterilizing course will be first described.

The user may input a cleansing and sterilizing command through the input unit, remote controller, or portable terminal provided in the controller 109. The controller 109 may control the beer maker in the cleansing and sterilizing course as the cleansing and sterilizing command is input.

The user may manipulate the beer extraction valve 62 to be opened, and then input the cleansing and sterilizing command through the input unit, remote controller, or portable terminal.

If the micro switch 630 of the beer extraction valve 62 is turned on, the controller 109 may turn on the water supply pump 52 and the water supply heater 53 so as to cleanse and sterilize the flow paths, and turn on the bypass valve 35 and the first, second, and third opening/closing valves 313, 323, and 333. In this case, the controller 109 may maintain the main valve 9 to be in a closed state. When the bypass valve 35 and the first, second, and third opening/closing valves 313, 323, and 333 are turned on, the bypass valve 35 and the first, second, and third opening/closing valves 313, 323, and 333 may all be opened.

When the water supply pump 52 is turned on, water of the water tank 51 may be discharged from the water tank 51 to pass through the water supply pump 52, and flow in the water supply heater 53 to be heated by the water supply heater 53. The water (i.e., hot water) heated by the water supply heater 53 may flow in the bypass flow path 34, the first capsule accommodation part 31, the second capsule accommodation part 32, and the third capsule accommodation part 33 through the water supply flow path 4. The water flowing in the bypass flow path 34, the first capsule accommodation part 31, the second capsule accommodation part 32, and the third capsule accommodation part 33 may flow in the main flow path 2. The water flowing in the main flow path 2 may pass through the beer extraction flow path 61 and then be discharged through the beer extraction valve 62.

In the above-described control of the beer maker, the water supply flow path 4, the bypass flow path 34, the bypass valve 35, the first capsule accommodation part 31, the second capsule accommodation part 32, the third capsule accommodation part 33, the main flow path 2, the beer extraction flow path 61, and the beer extraction valve 62 may be cleansed and sterilized by the hot water heated by the water supply heater 53.

In the beer maker, the above-described cleansing and sterilization may be performed for a cleansing setting time, and the cleansing and sterilizing step (S100) may be completed after the cleansing setting time. After the cleansing setting time elapses, the controller 109 may turn off the water supply pump 52 and the water supply heater 53, and turn off all of the bypass valve 35 and the first, second, and third opening/closing valves 313, 323, and 333. When the bypass valve 35 and the first, second, and third opening/closing valves 313, 323, and 333 are turned off, all of the bypass valve 35 and the first, second, and third opening/closing valves 313, 323, and 333 may be closed.

The user may manipulate the beer extraction valve 62 to be closed such that contamination through the beer extraction valve 62 is blocked in the cleansing and sterilizing step (S100).

In addition, the beer maker of this embodiment may include the beer brewing course for brewing beer.

Hereinafter, the beer brewing course will be described.

In order to perform the beer brewing course, the user may mount the beer brewing pack 12 in the fermentation tank 112 by opening the fermentation tank cover 114 and inserting the beer brewing pack 12 into the fermentation tank 112. After that, the user may shut the fermentation tank cover 114, and the beer brewing pack 12 may be accommodated and kept in the fermentation tank 112 and the fermentation tank cover 114. In addition, the user may insert the plurality of capsules C1, C2, and C3 into the supplier 3 and then cover the plurality of capsule accommodation parts 31, 32, and 33 with the lid module 37 before or after the beer brewing pack 12 is mounted in the fermentation tank 112.

The user may input a beer brewing command through the input unit, remote controller, or portable terminal provided in the controller 109. The controller 109 may control the beer maker in the beer brewing course as the beer brewing command is input.

The controller 109 may initiate a water supplying step (S200) of supplying water to the beer brewing pack 12 in the beer brewing course. The water supplying step S200 may be a liquid malt forming step of forming liquid malt by uniformly mixing malt with hot water.

The controller 109, in the water supply step (S200), may turn on the water supply pump 52 and the water supply heater 53, turn on the bypass valve 35, and turn on the main valve 9. The controller 109 may open the main valve 9 by turning on the main valve 9 that is in a turn-off state. The controller 109, in the water supplying step (S200), may maintain the first, second, and third opening/closing valves 313, 323, and 333 to be turned off. Meanwhile, the controller 109 may turn on the gas opening/closing value 73 when water is supplied to the beer brewing pack 12.

Water of the water tank 51 may be discharged from the water tank 51 to pass through the water supply pump 52, and flow in the water supply heater 53 to be heated by the water supply heater 53. The water heated by the water supply heater 53 may flow in the main flow path 2 by passing through the water supply flow path 4, the bypass flow path 34, and the bypass valve 35. The water flowing in the main flow path 2 may be introduced into the beer brewing pack 12 by passing through the main valve 9. The hot water introduced into the beer brewing pack 12 may be mixed with malt accommodated in the beer brewing pack 12, and the malt in the beer brewing pack 12 may be mixed with water to be gradually diluted. Meanwhile, since the hot water is supplied to the beer brewing pack 12, the malt accommodated in the beer brewing pack 12 can be rapidly and uniformly mixed with the hot water.

In the above-described water supplying step (S200), the bypass flow path 34 and the main flow path 2 may be in a state in which the bypass flow path 34 and the main flow path 2 have already been cleansed and sterilized by the cleansing and sterilizing step (S100), and uncontaminated clean hot water may be supplied to the beer brewing pack 12.

Meanwhile, in the above-described water supplying step (S200), the water supply heater 53 preferably heats water to a temperature of 50°C to 70°C, and the controller 109 may control the water supply heater 53 according to a temperature sensed by the thermistor 57.

The beer maker may perform the above-described water supply step (S200) until an amount of water, sensed by the flow meter 56, reaches a set flow amount. If the amount of water, sensed by the flow meter 56, reaches the set flow amount, the water supplying step (S200) may be completed. When the water supply step (S200) is completed, the controller 109 may turn off the water supply pump 52 and the water supply heater 53, and turn off the bypass valve 35. In addition, the controller 109 may turn off the gas opening/closing valve 73 when the water supply step (S200) is completed.

The beer maker, in the above-described water supplying step (S200), may be controlled such that air is introduced into the beer brewing pack 12.

In addition, the controller 109 may complete the water supply step (S200) by primarily supplying hot water to the inside of the beer brewing pack 12, injecting air into the beer brewing pack 12, and then secondarily injecting hot water into the beer brewing pack 12.

As an example of the water supplying step (S200), only a hot water supplying process may be performed.

As another example of the water supplying step (S200), a primary hot water supplying process of primarily supplying hot water, an air injecting process of injecting air, and a secondary hot water supplying process of secondarily injecting hot water may be sequentially performed.

First, the case where only the hot water supplying process is performed as an example of the water supplying step (S200) will be first described as follows.

When the hot water supplying process is initiated, the controller 109 may turn on the water supply pump 52 and the water supply heater 53, turn on the bypass valve 35, and turn on the main valve 9. The controller 109 may turn on the gas opening/closing valve 73 when the hot water supplying process is initiated. In addition, when the hot water supplying process is completed, the controller 109 may turn off the water supply pump 52 and the water supply heater 53, and turn off the bypass valve 35. The controller 109 may turn off the gas opening/closing valve 73 when the hot water supplying process is completed.

Hereinafter, a case where the primary hot water supplying process, the air injecting process, and the secondary hot water supplying process are sequentially performed as another example of the water supplying step (S200) will be described as follows.

When the primary hot water supplying process is initiated, the controller 109 may turn on the water supply pump 52 and the water supply heater 53, turn on the bypass valve 35, and turn on the main valve 9. In addition, the controller 109 may turn off the water supply pump 52 and the water supply heater 53 when the primary hot water supplying process is completed. The controller 109 may maintain the turn-on state of the bypass valve 35 and the main valve 9 when the primary hot water supplying process is completed. The controller 109 may maintain the turn-on state of the gas opening/closing valve 73 when the primary hot water supplying process is completed.

When the air injecting process is initiated, the controller 109 may turn on the air injection pump 82. While the air injection pump 82 is being turned on, air pumped by the air injection pump 82 may be introduced into the water supply flow path 4 through the air injection flow path 81, and then introduced into the beer brewing pack 12 through the bypass flow path 34, the main flow path 2, and the main valve 9. The air introduced into the beer brewing pack 12 may bump into liquid malt to assist the malt and the hot water to be more uniformly mixed together.

If a pressure sensed by the pressure sensor 72 is equal to or greater than a set pressure, the controller 109 may complete the air injecting process, and turn off the air injection pump 82 so as to complete the air injecting process. When the air injecting process is completed, the controller 109 may maintain the main valve 9, the bypass valve 35, and the gas opening/closing valve 73 to be turned on.

When the secondary hot water supplying process is initiated, the controller 109 may turn on the water supply pump 52 and the water supply heater 53. Like the primary water supply process, water of the water tank 51 may be supplied to the beer brewing pack 12, and new hot water may be additionally supplied to the beer brewing pack 12. The controller 109 may determine whether the secondary hot water supplying process has been completed according to a flow rate sensed by the flow meter 56 during the secondary hot water supplying process. If the integrated flow rate sensed by the flow meter 56 during the secondary hot water supplying process reaches a set flow amount, the controller 109 may determine that the secondary hot water supplying process has been completed, turn off the water supply pump 52 and the water supply heater 53, and turn off the main valve 9, the bypass valve 35, and the gas opening/closing valve 73.

Meanwhile, if the water supplying step (S200) is completed, the beer maker may perform a fermentation tank cooling step (S300) of cooling the fermentation tank 112.

The controller 109 may control the compressor 131 and the expansion device 133 of the refrigeration cycle apparatus 13 so as to cool the fermentation tank 112. A refrigerant compressed by the compressor 131 may be condensed by the condenser 132 and then expanded by the expansion device 133. The refrigerant expanded by the expansion device 133 may take heat from the fermentation tank 112 while passing through the evaporator 134, and be evaporated. The refrigerant passing through the evaporator 134 may be sucked into the compressor 131. The fermentation tank 112 may be gradually cooled when the compressor 131 is driven, and the beer brewing pack 12 accommodated in the fermentation tank 112 and the liquid malt accommodated in the beer brewing pack 12 may be cooled.

When the fermentation tank 112 is cooled as described above, the beer maker may cool the beer brewing pack 12 to a medium temperature, e.g., a temperature of 23°C to 27°C, and the controller 109 may control the compressor 131 according to a temperature sensed by the temperature sensor 16 installed in the fermentation tank 112. If the temperature sensed by the temperature sensor 16 exceeds a compressor-on temperature, the controller 109 may turn on the compressor 131. If the temperature sensed by the temperature sensor 16 is equal to or less than a compressor-off temperature, the controller 109 may turn off the compressor 131.

If the temperature sensed by the temperature sensor 16 is equal to or less than the compressor-off temperature at least once after the above-described fermentation tank cooling step S300 is initiated, the beer maker may perform a mixing step (S400) of mixing the liquid malt by supplying air to the inside of the beer brewing pack 12.

The beer maker may control the compressor 131 to be turned on/off according to the temperature sensed by the temperature sensor 16 even during the mixing step (S400), and the on/off control of the compressor 131 may be continued until additive injecting steps (S500, S600, and S700) which will be describe later are completed.

The controller 109 may turn on the air injection pump 82, and turn on the bypass valve 35, the main valve 9, and the gas opening/closing valve 73. While the air injection pump 82 is being turned on, the air pumped by the air injection pump 82 may be introduced into the water flow path 4 through the air injection flow path 81, and then introduced into the beer brewing pack 12 through the bypass flow path 34, the main flow path 2, and the main valve 9. The air introduced into the beer brewing pack 12 may bump into liquid malt to assist the malt and the hot water to be more uniformly mixed together.

The controller 109 may turn on the air injection pump 82 and mix the liquid malt with air for a mixing set time. If the air injection pump 82 is turned on and the mixing set time elapses, the controller 109 may turn off the air injection pump 82, and turn off the bypass valve 35 and the gas opening/closing valve 73. If the mixing set time elapses, the beer maker may complete the mixing step (S400).

The beer maker may perform the additive injecting steps (S500, S600, and S700) after the mixing step (S400).

In the additive injecting steps (S500, S600, and S700), the beer maker may simultaneously or sequentially inject an additive of the first capsule C1, an additive of the second capsule C2, and an additive of the third capsule C3.

The controller 109 may sequentially perform an additive injecting process (S500) of the first capsule C1, an additive injecting process (S600) of the second capsule C2, and an additive injecting process (S700) of the third capsule C3.

In the additive injecting process (S500) of the first capsule C1, the controller 109 may turn on the water supply pump 52, the main valve 9, the first opening/closing valve 313, and the gas opening/closing valve 73 for a first additive set time. When the water supply pump 52 is turned on, water of the water tank 51 may be introduced into the first capsule C1 by passing through the water supply pump 52, passing through the water supply heater 53, and then passing through the water supply flow path 4. The water introduced into the first capsule C1 may be mixed with the additive accommodated in the first capsule C1, flow in the main flow path together with the additive accommodated in the first capsule C1, and be injected into the beer brewing pack 12 through the main flow path 2. If the first additive set time elapses, the controller 109 may turn off the water supply pump 52 and the first opening/closing valve 313, and complete the additive injecting process (S500) of the first capsule C1.

In the additive injecting process (S600) of the second capsule C2, the controller 109 may turn on the water supply pump 52 and the second opening/closing valve 323 for a second additive set time. When the water supply pump 52 is turned on, water of the water tank 51 may be introduced into the second capsule C2 by passing through the water supply pump 52, passing through the water supply heater 53, and then passing through the water supply flow path 4. The water introduced into the second capsule C2 may be mixed with the additive accommodated in the second capsule C2, flow in the main flow path 2 together with the additive accommodated in the second capsule C2, and be injected into the beer brewing pack 12 through the main flow path 2. If the second additive set time elapses, the controller 109 may turn off the water supply pump 52 and the second opening/closing valve 323, and complete the additive injecting process (S600) of the second capsule C2.

In the additive injecting process (S700) of the third capsule C3, the controller 109 may turn on the water supply pump 52 and the third opening/closing valve 333 for a third additive set time. When the water supply pump 52 is turned on, water of the water tank 51 may be introduced into the third capsule C3 by passing through the water supply pump 52, passing through the water supply heater 53, and then passing through the water supply flow path 4. The water introduced into the third capsule C3 may be mixed with the additive accommodated in the third capsule C3, flow in the main flow path 2 together with the additive accommodated in the third capsule C3, and be injected into the beer brewing pack 12 through the main flow path 2. If the third additive set time elapses, the controller 109 may turn off the water supply pump 52 and the third opening/closing valve 333, and complete the additive injecting process (S700) of the third capsule C3.

If all of the additive injecting steps (S500, S600, and S700) are completed, the beer maker may perform a supplier remaining water removing step (S800) of removing remaining water in the supplier 3.

In the supplier remaining water removing step (S800), the controller 109 may turn on the air injection pump 82, turn on the first opening/closing valve 313, the second opening/closing valve 323, and the third opening/closing valve 333, and turn on the main valve 9 and the gas opening/closing valve 73.

When the air injection pump is turned on, air may pass through the air injection flow path 81 and the water supply flow path 4 and then be supplied to the first capsule accommodation part 31, the second capsule accommodation part 32, and the third capsule accommodation part 33, to blow water remaining in the first capsule accommodation part 31, the second capsule accommodation part 32, and the third capsule accommodation part 33. The air may be moved to the beer brewing pack 12 together with the remaining water moved in the first capsule accommodation part 31, the second capsule accommodation part 32, and the third capsule accommodation part 33.

The controller 109 may turn on the air injection pump 82 for a remaining water removing set time. If the remaining water removing set time elapses, the controller 109 may turn off the air injection pump 82, and turn off the first opening/closing valve 313, the second opening/closing valve 323, the third opening/closing valve 333, the main valve 9, and the gas opening/closing valve 73.

If the remaining water removing set time elapses, the beer maker may complete the supplier remaining water removing step (S800).

After the supplier remaining water removing step (S800) is completed, the beer maker may sequentially perform a first fermentation step (S900) and a second fermentation step (S1000).

In the primary fermentation step (S900), the controller 109 may control the compressor 131 to a primary fermentation target temperature, and control the compressor 131 such that the temperature sensed by the temperature sensor 16 maintains a primary fermentation set temperature range. After the first fermentation step (S900) is initiated, the controller 109 may periodically turn on and then turn off the gas opening/closing valve 73, and store a pressure sensed by the pressure sensor 72 in a storage part (not shown) while the gas opening/closing valve 73 is being turned on. If a change in pressure periodically sensed by the pressure sensor 72 exceeds a primary fermentation set pressure, the controller 109 may determine that primary fermentation has been completed, and complete the primary fermentation step (S900).

After the primary fermentation step (S900) is completed, the controller 109 may initiate the secondary fermentation step (S1000). In the secondary fermentation step (S1000), the controller 109 may control the compressor 131 to a secondary fermentation target temperature, and control the compressor 131 such that the temperature sensed by the temperature sensor 16 maintains a secondary fermentation set temperature range. After the second fermentation step (S1000) is initiated, the controller 109 may periodically turn on and then turn off the gas opening/closing valve 73, and store a pressure sensed by the pressure sensor 72 in the storage part (not shown) while the gas opening/closing valve 73 is being turned on. If a change in pressure periodically sensed by the pressure sensor 72 exceeds a secondary fermentation set pressure, the controller 109 may determine that secondary fermentation has been completed, and complete the secondary fermentation step (S1000).

If both of the primary fermentation step (S900) and the secondary fermentation step (S1000) are completed, the beer maker may perform a ripening step (S1100).

In the ripening step (S1100), the controller 109 may wait during a ripening time, and control the compressor 131 such that the temperature of beer maintains between an upper limit value of a set ripening temperature and a lower limit value of the set ripening temperature during the ripening time. If the temperature sensed by the temperature sensor 16 is equal to or less than the lower limit value of the set ripening temperature, the controller 109 may turn off the compressor 131. If the temperature sensed by the temperature sensor 16 is equal to or greater than the upper limit value of the set ripening temperature, the controller 109 may turn on the compressor 131.

In the beer maker, if the ripening time elapses, all of the steps of brewing beer may be completed, and the user may extract the beer by manipulating the beer extraction valve 62.

If the user manipulates the beer extraction valve 62 to be opened, the micro switch 630 may be point-contacted, and the controller 109 may open the main valve 9 in the state in which all of the steps of brewing the beer are completed. In addition, the controller 109 may turn on the air pump 152 and the air control valve 156.

When the air pump 152 is turned on, air may be supplied to the inside of the fermentation tank assembly 11 through the air supply flow path 154. The air supplied to the inside of the fermentation tank assembly 11 may press the beer brewing pack 12. When the beer brewing pack 12 is pressed by the air, beer of which fermentation and ripening have been completed in the beer brewing pack 12 may flow in the main flow path 2. The beer flowing in the main flow path 2 may pass through the beer extraction flow path 61, flow in the beer extraction valve 62, and then be extracted to the outside through the beer extraction valve 62.

Hereinafter, a beer extracting step (S1200) will be described.

Hereinafter, components and operations different from those of the above-described embodiment will be described, and components identical or similar to those of the above-described embodiment will be omitted to avoid redundancy.

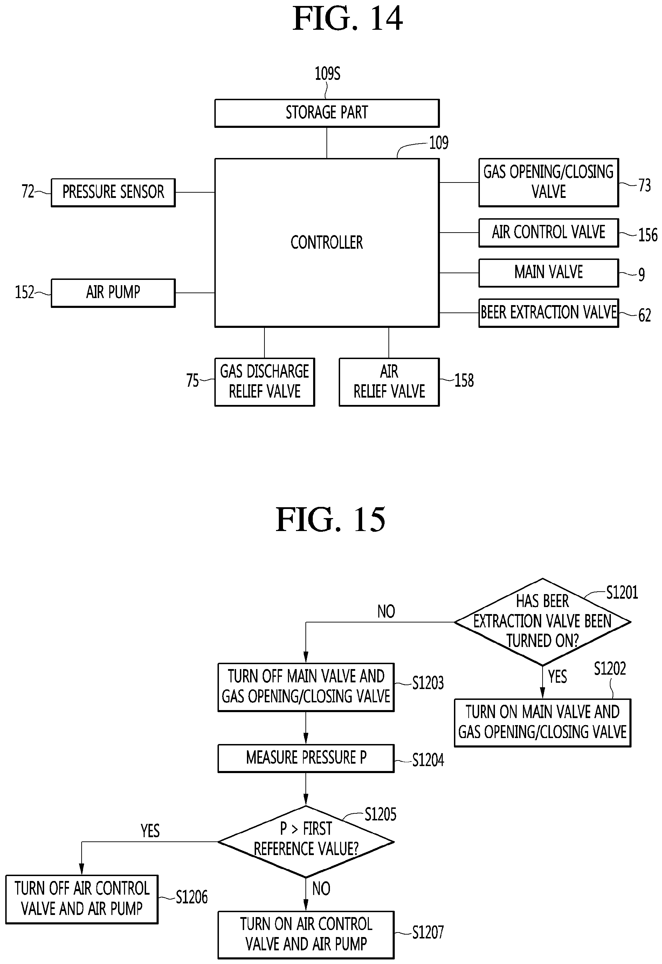

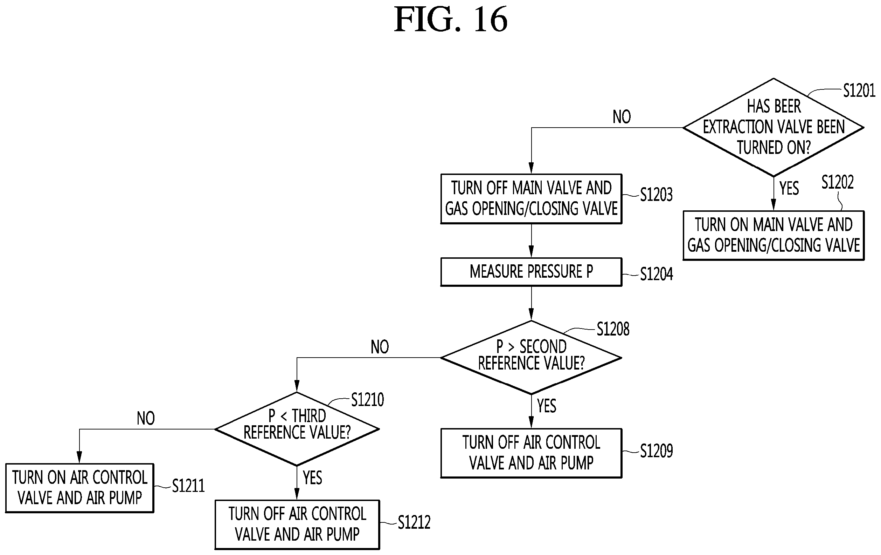

FIG. 14 is a configuration view of a control system for extracting beer in the beer maker according to the embodiment. FIG. 15 is a flowchart illustrating a sequence of a first embodiment of beer extraction control preformed by the beer maker according to the embodiment. FIG. 16 is a flowchart illustrating a sequence of a second embodiment of the beer extraction control preformed by the beer maker according to the embodiment.

The control system for extracting beer may include the fermentation tank assembly 11 including a fermentation tank having an opening formed therein and a fermentation tank cover covering the opening; the beer brewing pack 12 inserted and accommodated in the fermentation tank through the opening, the beer brewing pack 12 containing beer therein; the main flow path 2 connected to the fermentation tank cover; the beer extraction flow path 61 connected to the main flow path 2; the gas extraction flow path 71 connected to the fermentation tank cover; and the air supply flow path 154 connected to the inside of the fermentation tank to supply air between the fermentation tank and the beer brewing pack 12.

The beer maker may further include a storage part 109S. The storage part 109S may store a pressure value measured by the pressure sensor 72. The controller 109 may control the storage part 109S to store a pressure value, and load the stored pressure value.

First, a sequence of the first embodiment of the beer extraction control will be described.

The beer extraction valve 62 may be manipulated by a user. The user may turn on the beer extraction valve 62 so as to extract beer, or turn off the beer extraction valve 62 so as to end the extraction of the beer.

A micro switch may be included in the beer extraction valve 62. The micro switch may be turned on or turned off as the beer extraction valve 62 is manipulated.

The controller 109 may detect that the beer extraction valve 62 has been turned on or turned off. Also, the controller 109 may detect that the micro switch has been turned on or turned off.

The controller 109 may detect that the beer extraction valve 62 has been turned on or turned off (S1201). When the beer extraction valve 62 is turned on, the controller 109 may control the main valve 9 to open the main flow path 2. When the main valve 9 is turned on, the main flow path 2 may be opened.

In addition, when the beer extraction valve 62 is turned on, the controller 109 may control the gas opening/closing valve 73 to open the gas extraction flow path 71. When the gas opening/closing valve 73 is turned on, the gas extraction flow path 71 may be opened (S1202).

If the main flow path 2 is opened, beer contained in the beer brewing pack 12 may flow along the main flow path 2, and be extracted along the beer extraction flow path 61 connected to the main flow path 2.

In addition, if the gas extraction flow path 71 is opened, gas of the beer brewing pack 12 may be extracted to the outside of the beer maker along the gas extraction flow path 71.

When the beer extraction valve 62 is turned off, the controller 109 may control the main valve 9 to close the main flow path 2. When the main valve 9 is turned off, the main flow path 2 may be closed.

In addition, when the beer extraction valve 62 is turned off, the controller 109 may control the gas opening/closing valve 73 to close the gas extraction flow path 71. When the gas opening/closing valve 73 is turned off, the gas extraction flow path 71 may be closed (S1203).

When the main valve 9 is turned off, the controller may control the pressure sensor 72 to measure a pressure of the beer brewing pack 12 (S1204).

The controller 109 may compare and calculate whether a pressure P measured by the pressure sensor 72 is smaller than a first reference value (S1205). The first reference value may be a value previously stored in the storage part S109S.

When the measured pressure P is greater than the first reference value, the controller 109 may control the air control valve 156 to close the air supply flow path 154. When the air control valve 156 is turned off, the air supply flow path 154 may be closed.

In addition, when the measured pressure P is greater than the first reference value, the controller 109 may control the air pump 152 not to inject air into the fermentation tank (S1206). When the air pump 152 is turned off, driving of the air pump 152 may be stopped, and air may not be injected into the fermentation tank.

When the measured pressure P is smaller than the first reference value, the controller 109 may control the air control valve 156 to open the air supply flow path 154. When the air control valve 156 is turned on, the air supply flow path 154 may be closed.

In addition, when the measured pressure P is smaller than the first reference value, the controller 109 may control the air pump 152 to inject air into the fermentation tank. When the air pump 152 is turned on, the air pump 152 may be driven, and air may be injected into the fermentation tank (S1207).

When the air pump 152 is driven and the air supply flow path is opened, the air injected by the air pump 152 may be injected into the fermentation tank along the air supply flow path 154. The air injected into the fermentation tank may increase the pressure in the fermentation tank.

Subsequently, a sequence of the second embodiment of the beer extraction control will be described. Hereinafter, components and operations different from those of the above-described first embodiment of the beer extraction control will be described, and components identical or similar to those of the above-described first embodiment will be omitted to avoid redundancy.

According to the second embodiment of the beer extraction control, the controller 109 may detect whether the beer extraction valve 62 has been turned on or turned off (S1201). The controller 109 may control the gas opening/closing valve 73 to open the gas extraction flow path 71 (S1202).

In addition, when the beer extraction valve 62 is turned off, the controller 109 may control the gas opening/closing valve 73 to close the gas extraction flow path 71 (S1203).

When the main valve 9 is turned off, the controller 109 may control the pressure sensor 72 to measure a pressure of the beer brewing pack 12 (S1204).

The controller 109 may compare and calculate whether a pressure P measured by the pressure sensor 72 is greater than a second reference value (S1208). The second reference value may be a value previously stored in the storage part 109S.

When the measured pressure P is greater than the second reference value, the controller 109 may control the air control valve 156 to close the air supply flow path 154. When the air control valve 156 is turned off, the air supply flow path 154 may be closed.

In addition, when the measured pressure P is greater than the second reference value, the controller 109 may control the air pump 152 not to inject air into the fermentation tank (S1209). When the air pump 152 is turned off, driving of the air pump 152 may be stopped, and air may not be injected into the fermentation tank.

When the measured pressure P is smaller than the second reference value, the controller 109 may compare and calculate whether the measured pressure P is smaller than a third reference value (S1210). The third reference value may be a value previously stored in the storage part 109S.

When the measured pressure P is greater than the third reference value, the controller 109 may control the air control valve 156 to close the air supply flow path 154. When the air control valve 156 is turned off, the air supply flow path 154 may be closed.

In addition, when the measured pressure P is greater than the third reference value, the controller 109 may control the air pump 152 not to inject air into the fermentation tank (S1211). When the air pump 152 is turned off, the driving of the air pump may be stopped, and air may not be injected into the fermentation tank.

When the measured pressure P is smaller than the third reference value, the controller 109 may control the air control valve 156 to open the air supply flow path 154. When the air control valve 156 is turned on, the air supply flow path 154 may be closed.

In addition, when the measured pressure P is smaller than the third reference value, the controller 109 may control the air pump 152 to inject air into the fermentation tank. When the air pump 152 is turned on, the air pump 152 may be driven, and air may be injected into the fermentation tank (S1212).

When the air pump 152 is driven and the air supply flow path 154 is opened, the air injected by the air pump 152 may be injected into the fermentation tank along the air supply flow path 154. The air injected into the fermentation tank may increase the pressure in the fermentation tank.

The gas extraction flow path 7 may further include a gas discharge relief valve 75. The gas discharge relief valve 75 may prevent the pressure of the beer brewing pack 12 from being rapidly increased.

Components included in the gas extraction flow path 71 may be the gas discharge relief valve 75, the pressure sensor 72, the gas opening/closing valve 73, and the air filter along the direction in which gas is discharged.

The air supply flow path 154 may further include an air relief valve. The air relief valve 158 may prevent the pressure of a space between the fermentation tank and the beer brewing pack 12 from being rapidly increased.

Components included in the air supply flow path 154 may be the air pump 152, the air control valve 156, and the air relief valve 158 along the direction in which air is injected.

The beer extraction flow path 61 may include a bubble blocking part 63. The bubble blocking part 63 may minimize bubbles of extracted beer.

Components included in the beer extraction flow path 61 may be the bubble blocking part 63 and the beer extraction valve 62 along the direction in which beer is extracted.

The controller 109 may maintain the pressure in the beer brewing pack 12 by driving the air pump 152. If the pressure in the beer brewing pack 12 is decreased to a predetermined value or less even when the air pump 152 is driven, the controller 109 may determine that the entire beer in the beer brewing pack 12 has been consumed.

In addition, an amount of beer extracted per unit time when the beer is extracted may be previously stored data. Therefore, the controller 109 may calculate a beer extraction amount by measuring a time required to extract the beer. Alternatively, the controller 109 may calculate a beer extraction amount by measuring a time required to turn on the main valve 9. Alternatively, the controller 109 may calculate a beer extraction amount by measuring a time required to turn on the micro switch 630.

The controller 109 may calculate a beer extraction amount, and accordingly calculate an amount of beer remaining in the beer brewing pack 12.

Meanwhile, the flow path including the main flow path 2, the water supply flow path 4, the beer extraction flow path 61, the gas extraction flow path 71, the air injection flow path 81, the air supply flow path 154, and the like, which are described in the present disclosure, may be formed a hose or tube through which a fluid can pass. The flow path may be configured with a plurality of hoses or tubes continued in the length direction thereof. The flow path may include two hoses or tubes disposed with another component such as a control valve, interposed therebetween.

The length, width, and height of the beer maker may be respectively within the range from 300mm until at maximum until 1000mm, respectively. Preferably, the length of the beer maker may be 354 mm, the width may be 542 mm, and the height may be 468 mm.

The capacity of the beer that can be manufactured by the beer maker may be from 1 liter or more until a maximum capacity of 30 liters. Preferably, the capacity of the beer that can be manufactured by the beer maker may be from 5 liters or more until 15 liters.

## Claims

1. A beer maker comprising:
a fermentation tank assembly (11) including a fermentation tank (112) having an opening (111) formed therein and a fermentation tank cover (114) covering the opening (111);
the fermentation tank assembly (11) is configured to accommodate a beer brewing pack (12) through the opening (111);
a main flow path (2) connected to the fermentation tank assembly (11);
a beer extraction flow path (6) connected to the main flow path (2);
**characterized by**
an air supply flow path (154) connected to the inside of the fermentation tank (112) to supply air between the beer brewing pack (12) and the fermentation tank (112); and
an air relief valve (158) disposed in the air supply flow path (154).

2. The beer maker of claim 1, comprising an air pump (152) disposed in the air supply flow path (154).

3. The beer maker of claim 2, further comprising a controller (109) configured to drive the air pump (152) to inject air into the fermentation tank (112) through the air supply flow path (154) after beer extraction is completed.

4. The beer maker as claimed in any one the preceding claims, further comprising:
a gas extraction flow path (71) connected to the fermentation tank assembly (11); and
a gas opening/closing valve (73) configured to open/close the gas extraction flow path (71).

5. The beer maker of claim 4, further comprising a controller (109) configured to control the gas opening/closing valve (73) to open the gas extraction flow path (71) for extracting gas of the beer brewing pack (12) through the gas extraction flow path (71), when the beer is extracted and if a beer brewing pack (12) is inserted in the fermentation tank (112).

6. The beer maker as claimed in any one the preceding claims, further comprising:
a main valve (9) configured to open/close the main flow path (2);
a beer extraction valve (62) disposed in the beer extraction flow path (6); and
a controller (109) configured to control the main valve (9) to open the main flow path (2) if the beer extraction valve (62) is opened, and/or to close the main flow path (2) if the beer extraction valve (62) is closed.

7. The beer maker as claimed in claim 6, wherein the controller (190) is configured to control the main valve (9) to open the main flow path (2) and the gas opening/closing valve (73) to open the gas extraction flow path (71), if the beer extraction valve (62) is opened.

8. The beer maker as claimed in any one the preceding claims 6-7, wherein the controller (109) is configured to control the main valve (9) to close the main flow path (2) and to control the gas opening/closing valve (73) to close the gas extraction flow path (71), after the beer extraction is completed.

9. The beer maker as claimed in any one the preceding claims 6-8, wherein the controller (109) is configured to control an air control valve (156) to open the air supply flow path (154) and to drives the air pump (152) after the beer extraction is completed.

10. The beer maker as claimed in any one the preceding claims 6-9, wherein the beer extraction valve (62) further includes a micro switch (630) configured to be turned on or turned off, when the beer extraction valve (62) is opened or closed.

11. The beer maker of claim 10, wherein the controller (109) is configured:
to control the main valve (9) to open the main flow path (2) and to control the gas opening/closing valve (73) to open the gas extraction flow path (71) when the micro switch (630) is turned on; and/or
to control the main valve (9) to open the main flow path (2), to control the gas opening/closing valve (73) to close the gas extraction flow path (71), to control the air control valve (156) to open the air supply flow path (154), and to drives the air pump (152) when the micro switch (630) is turned off.

12. The beer maker as claimed in any one the preceding claims, further comprising a pressure sensor (72) disposed in the gas extraction flow path (71) and/or the fermentation tank cover (114), the pressure sensor (72) is configured to measure a pressure value.

13. The beer maker of claim 12, wherein the controller (109) is configured to control the air control valve (156) to open the air supply flow path (154), and to drive the air pump (152) to inject air into the fermentation tank assembly (11), if the pressure value is less than a first reference value.

14. The beer maker of claim 12 or 13, wherein the controller (109) is configured:
to control the pressure sensor (72) to measure a pressure value of the gas extraction flow paths (71), and
to control the air control valve (156) to close the air supply flow path (154) and to stop the air pump (152) if the pressure value exceeds a second reference value.

15. The beer maker as claimed in any one the preceding claims, further comprising a gas discharge relief valve (75) disposed in the gas extraction flow path (71).

## Patentansprüche

1. Bierbereiter, der Folgendes umfasst:
eine Fermentationstankanordnung (11), die einen Fermentationstank (112), der eine darin ausgebildete Öffnung (111) hat, und eine Fermentationstankabdeckung (114), die die Öffnung (111) bedeckt, umfasst;
wobei die Fermentationstankanordnung (11) konfiguriert ist, eine Bierbraupackung (12) durch die Öffnung (111) aufzunehmen;
einen Hauptströmungspfad (2), der mit der Fermentationstankanordnung (11) verbunden ist;
einen Strömungspfad (6) zur Bierextraktion, der mit dem Hauptströmungspfad (2) verbunden ist;
**gekennzeichnet durch**
einen Luftzufuhr-Strömungspfad (154), der mit dem Inneren des Fermentationstanks (112) verbunden ist, um Luft zwischen der Bierbraupackung (12) und dem Fermentationstank (112) zuzuführen; und
ein Luft-Entlüftungsventil (158), das im Luftzufuhr-Strömungspfad (154) angeordnet ist.

2. Bierbereiter nach Anspruch 1, der eine Luftpumpe (152) umfasst, die im Luftzufuhr-Strömungspfad (154) angeordnet ist.

3. Bierbereiter nach Anspruch 2, der ferner eine Steuereinheit (109) umfasst, die konfiguriert ist, die Luftpumpe (152) anzusteuern, Luft durch den Luftzufuhr-Strömungspfad (154) in den Fermentationstank (112) einzublasen, nachdem die Bierextraktion beendet worden ist.

4. Bierbereiter nach einem der vorhergehenden Ansprüche, der ferner Folgendes umfasst:
einen Strömungspfad (71) zur Gasextraktion, der mit der Fermentationstankanordnung (11) verbunden ist; und
ein Gasventil (73) zum Öffnen bzw. Schließen, das konfiguriert ist, den Strömungspfad (71) zur Gasextraktion zu öffnen bzw. zu schließen.

5. Bierbereiter nach Anspruch 4, der ferner eine Steuereinheit (109) umfasst, die konfiguriert ist, das Gasventil (73) zum Öffnen bzw. Schließen zu steuern, den Strömungspfad (71) zur Gasextraktion zu öffnen, um Gas der Bierbraupackung (12) durch den Strömungspfad (71) zur Gasextraktion zu extrahieren, wenn das Bier extrahiert wird und falls eine Bierbraupackung (12) in den Fermentationstank (112) eingesetzt ist.

6. Bierbereiter nach einem der vorhergehenden Ansprüche, der ferner Folgendes umfasst:
ein Hauptventil (9), das konfiguriert ist, den Hauptströmungspfad (2) zu öffnen bzw. zu schließen;
ein Bierextraktionsventil (62), das im Strömungspfad (6) zur Bierextraktion angeordnet ist; und
eine Steuereinheit (109), die konfiguriert ist, das Hauptventil (9) zu steuern, um den Hauptströmungspfad (2) zu öffnen, falls das Bierextraktionsventil (62) geöffnet ist, und/oder den Hauptströmungspfad (2) zu schließen, falls das Bierextraktionsventil (62) geschlossen ist.

7. Bierbereiter nach Anspruch 6, wobei die Steuereinheit (109) konfiguriert ist, das Hauptventil (9) zu steuern, den Hauptströmungspfad (2) zu öffnen, und das Gasventil (73) zum Öffnen bzw. Schließen zu steuern, den Strömungspfad (71) zur Gasextraktion zu öffnen, falls das Bierextraktionsventil (62) geöffnet ist.

8. Bierbereiter nach einem der vorhergehenden Ansprüche 6-7, wobei die Steuereinheit (109) konfiguriert ist, das Hauptventil (9) zu steuern, den Hauptströmungspfad (2) zu schließen, und das Gasventil (73) zum Öffnen bzw. Schließen zu steuern, den Strömungspfad (71) zur Gasextraktion zu schließen, nachdem die Bierextraktion beendet worden ist.

9. Bierbereiter nach einem der vorhergehenden Ansprüche 6-8, wobei die Steuereinheit (109) konfiguriert ist, ein Luftsteuerventil (156) zu steuern, um den Luftzufuhr-Strömungspfad (154) zu öffnen, und die Luftpumpe (152) anzusteuern, nachdem die Bierextraktion beendet worden ist.

10. Bierbereiter nach einem der vorhergehenden Ansprüche 6-9, wobei das Bierextraktionsventil (62) ferner einen Mikroschalter (630) umfasst, der so konfiguriert ist, dass er eingeschaltet oder ausgeschaltet wird, wenn das Bierextraktionsventil (62) geöffnet oder geschlossen ist.

11. Bierbereiter nach Anspruch 10, wobei die Steuereinheit (109) konfiguriert ist zum:
Steuern des Hauptventils (9), um den Hauptströmungspfad (2) zu öffnen, und Steuern des Gasventils (73) zum Öffnen bzw. Schließen, um den Strömungspfad (71) zur Gasextraktion zu öffnen, wenn der Mikroschalter (630) eingeschaltet ist; und/oder
Steuern des Hauptventils (9), um den Hauptströmungspfad (2) zu öffnen, Steuern des Gasventils (73) zum Öffnen bzw. Schließen, um den Strömungspfad (71) zur Gasextraktion zu schließen, Steuern des Luftsteuerventils (156), um den Luftzufuhr-Strömungspfad (154) zu öffnen, und Ansteuern der Luftpumpe (152), wenn der Mikroschalter (630) ausgeschaltet ist.

12. Bierbereiter nach einem der vorhergehenden Ansprüche, der ferner einen Drucksensor (72) umfasst, der im Strömungspfad (71) zur Gasextraktion und/oder in der Fermentationstankabdeckung (114) angeordnet ist, wobei der Drucksensor (72) konfiguriert ist, einen Druckwert zu messen.

13. Bierbereiter nach Anspruch 12, wobei die Steuereinheit (109) konfiguriert ist, das Luftsteuerventil (156) zu steuern, um den Luftzufuhr-Strömungspfad (154) zu öffnen, und die Luftpumpe (152) anzusteuern, um Luft in die Fermentationstankanordnung (11) einzublasen, falls der Druckwert niedriger als ein erster Referenzwert ist.

14. Bierbereiter nach Anspruch 12 oder 13, wobei die Steuereinheit (109) konfiguriert ist zum:
Steuern des Drucksensors (72), um einen Druckwert des Strömungspfads (71) zur Gasextraktion zu messen, und
Steuern des Luftsteuerventils (156), um den Luftzufuhr-Strömungspfad (154) zu schließen und die Luftpumpe (152) zu stoppen, falls der Druckwert einen zweiten Referenzwert überschreitet.

15. Bierbereiter nach einem der vorhergehenden Ansprüche, der ferner ein Entlüftungsventil (75) zum Abführen von Gas umfasst, das im Strömungspfad (71) zur Gasextraktion angeordnet ist.

## Revendications

1. Appareil de préparation de bière comportant :
un ensemble de réservoir de fermentation (11) incluant un réservoir de fermentation (112) ayant une ouverture (111) formée dans celui-ci et un couvercle de réservoir de fermentation (114) recouvrant l'ouverture (111) ;
l'ensemble de réservoir de fermentation (11) est configuré pour recevoir un ensemble de brassage de bière (12) à travers l'ouverture (111) ;
un trajet d'écoulement principal (2) relié à l'ensemble de réservoir de fermentation (11)
un trajet d'écoulement pour l'extraction de bière (6) relié au trajet d'écoulement principal (2) ;
**caractérisé par**
un trajet d'écoulement pour l'alimentation en air (154) relié à l'intérieur du réservoir de fermentation (112) pour fournir de l'air entre l'ensemble de brassage de bière (12) et le réservoir de fermentation (112) ; et
une soupape de décharge d'air (158) disposée dans le trajet d'écoulement pour l'alimentation en air (154).

2. Appareil de préparation de bière selon la revendication 1, comportant une pompe à air (152) disposée dans le trajet d'écoulement pour l'alimentation en air (154).

3. Appareil de préparation de bière selon la revendication 2, comportant en outre une commande (109) configurée pour entraîner la pompe à air (152) pour injecter de l'air dans le réservoir de fermentation (112) par le trajet d'écoulement pour l'alimentation en air (154) après la fin de l'extraction de bière.

4. Appareil de préparation de bière selon l'une quelconque des revendications précédentes, comportant en outre :
un trajet d'écoulement pour l'extraction de gaz (71) relié à l'ensemble de réservoir de fermentation (11) ; et
un robinet d'ouverture/fermeture de gaz (73) configuré pour ouvrir/former le trajet d'écoulement pour l'extraction de gaz (71).

5. Appareil de préparation de bière selon la revendication 4, comportant en outre une commande (109) configurée pour commander au robinet d'ouverture/fermeture de gaz (73) d'ouvrir le trajet d'écoulement pour l'extraction de gaz (71) afin d'extraire du gaz de l'ensemble de brassage de bière (12) par le trajet d'écoulement pour l'extraction de gaz (71), lorsque la bière est extraite et si un ensemble de brassage de bière (12) est inséré dans le réservoir de fermentation (112).

6. Appareil de préparation de bière selon l'une quelconque des revendications précédentes, comportant en outre :
un robinet principal (9) configuré pour ouvrir/former le trajet d'écoulement principal (2)
un robinet d'extraction de bière (62) disposé dans le trajet d'écoulement pour l'extraction de bière (6) ; et
une commande (109) configurée pour commander au robinet principal (9) d'ouvrir le trajet d'écoulement principal (2) si le robinet d'extraction de bière (62) est ouvert et/ou de fermer le trajet d'écoulement principal (2) si le robinet d'extraction de bière (62) est fermé.

7. Appareil de préparation de bière selon la revendication 6, dans lequel la commande (109) est configurée pour commander au robinet principal (9) d'ouvrir le trajet d'écoulement principal (2) et au robinet d'ouverture/fermeture de gaz (73) d'ouvrir le trajet d'écoulement pour l'extraction de gaz (71), si le robinet d'extraction de bière (62) est ouvert.

8. Appareil de préparation de bière selon l'une quelconque des revendications 6 à 7, dans lequel la commande (109) est configurée pour commander au robinet principal (9) d'ouvrir le trajet d'écoulement principal (2) et au robinet d'ouverture/fermeture de gaz (73) de fermer le trajet d'écoulement pour l'extraction de gaz (71), après la fin de l'extraction de bière.

9. Appareil de préparation de bière selon l'une quelconque des revendications 6 à 8 précédentes, dans lequel la commande (109) est configurée pour commander à une soupape de commande d'air (156) d'ouvrir le trajet d'écoulement pour l'alimentation en air (154) et d'entraîner la pompe à air (152) après que la fin de l'extraction de bière.

10. Appareil de préparation de bière selon l'une quelconque des revendications 6 à 9 précédentes, dans lequel le robinet d'extraction de bière (62) inclut en outre un micro commutateur (630) configuré pour être mis à l'état passant ou bloqué, lorsque le robinet d'extraction de bière (62) est ouvert ou fermé.

11. Appareil de préparation de bière selon la revendication 10, dans lequel la commande (109) est configurée pour :
commander au robinet principal (9) d'ouvrir le trajet d'écoulement principal (2) et commander au robinet d'ouverture/fermeture de gaz (73) d'ouvrir le trajet d'écoulement pour l'extraction de gaz (71) lorsque le micro commutateur (630) est mis à l'état passant ; et/ou
commander au robinet principal (9) d'ouvrir le trajet d'écoulement principal (2), commander au robinet d'ouverture/fermeture de gaz (73) de fermer le trajet d'écoulement pour l'extraction de gaz (71), commander à la soupape de commande d'air (156) d'ouvrir le trajet d'écoulement pour l'alimentation en air (154), et entraîner la pompe à air (152) lorsque le micro commutateur (160) est mis à l'état bloqué.

12. Appareil de préparation de bière selon l'une quelconque des revendications précédentes, comportant en outre un capteur de pression (72) disposé dans le trajet d'écoulement pour l'extraction de gaz (71) et/ou le couvercle de réservoir de fermentation (114), le capteur de pression (72) étant configuré pour mesurer une valeur de pression.

13. Appareil de préparation de bière selon la revendication 12, dans lequel la commande (109) est configurée pour commander à la soupape de commande d'air (156) d'ouvrir le trajet d'écoulement pour l'alimentation en air (154), et entraîner la pompe à air (152) pour injecter de l'air dans l'ensemble de réservoir de fermentation (11), si la valeur de pression est inférieure à une première valeur de référence.

14. Appareil de préparation de bière selon la revendication 13, dans lequel la commande (109) est configurée pour :
commander au capteur de pression (72) de mesurer une valeur de pression du trajet d'écoulement pour l'extraction de gaz (71), et
commander à la soupape de commande d'air (156) de fermer le trajet d'écoulement pour l'alimentation en air (154) et arrêter la pompe à air (152) si la valeur de pression dépasse une seconde valeur de référence.

15. Appareil de préparation de bière selon l'une quelconque des revendications précédentes, comportant en outre une soupape de décharge de gaz (75) disposée dans le trajet d'écoulement pour l'extraction de gaz (71).
